(19) **Europäisches Patentamt**
**European Patent Office**
**Office européen des brevets**

(11) **EP 3 046 355 B1**

(12) **EUROPEAN PATENT SPECIFICATION**

(45) Date of publication and mention
of the grant of the patent:
**03.04.2019 Bulletin 2019/14**

(21) Application number: **13896220.4**

(22) Date of filing: **30.10.2013**

(51) Int Cl.:
**H04W 16/10** *(2009.01)*

(86) International application number:
**PCT/CN2013/086255**

(87) International publication number:
**WO 2015/061996 (07.05.2015 Gazette 2015/18)**

(54) **SPECTRUM ALLOCATION METHOD AND SPECTRUM ALLOCATION APPARATUS**

SPEKTRUMSZUWEISUNGSVERFAHREN UND SPEKTRUMSNZUWEISUNGSVORRICHTUNG

PROCÉDÉ ET APPAREIL D'ATTRIBUTION DE BANDES DE FRÉQUENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2016 Bulletin 2016/29**

(73) Proprietor: **Huawei Technologies Co., Ltd.
Longgang District
Shenzhen, Guangdong 518129 (CN)**

(72) Inventor: **ZHUANG, Hongcheng
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2013/026417      WO-A1-2013/124435
CN-A- 1 992 962       CN-A- 102 118 759
CN-A- 102 958 057      US-A1- 2006 212 588
US-A1- 2013 072 246**

## Description

### TECHNICAL FIELD

The present application relates to the technical field of communication, in particular to a spectrum allocation method and spectrum allocation apparatus.

### BACKGROUND

With an increasing demand of user data rate, a development trend of base station miniaturization is increasingly obvious. Therefore, a mobile communication network is increasingly dynamic, the number of network elements to be maintained by an operator is in rapid growth, and the cost needed for maintenance also gets larger and larger. In addition, high mobility of a user application results in increasingly frequent change of a network service. A self-organization network (self-organization network; SON) technology is proposed to achieve automation at the planning, deployment and operation and maintenance stages of the mobile communication network as much as possible, so as to adapt change of the network and achieve an objective of saving operation expense (OPEX).

In an existing cellular network, a spectrum is basically used on the basis of spectrum planning at the network planning/deployment stage, and is basically invariable at the operation and maintenance stage, for example, spectrum reuse of GSM, UMTS networks. Static spectrum reuse is not suitable for increasingly dynamic networks. In an LTE network, since the spectrum may be completely reused, when using the spectrum, the interference between cells needs to be considered, and the usual practice is to adopt the fractional frequency reuse (FFR) or soft frequency reuse (SFR) technology to allocate orthogonal frequency bands to cell edge users. FFR/SFR is used for adjusting the allocation of the frequency bands of the cell edges based on the interference, but cannot completely reflect the performance of the network, in addition, the allocation granularity of an SFR frequency band is coarser, the frequency band is usually divided into three parts and six parts at most, few options are available, so the degree of freedom is limited, and the quick changes of the network services cannot be adapted.

The solution in the prior art is to use dynamic FFR, namely, after frequency band division, sub-bands used by the edge users of neighbor cells are orthogonal, but due to the imbalance of cell services, cells having more edge users require more bandwidths, at this time, the sub-bands of neighbor cells with smaller loads may be used, and the borrowed sub-bands are generally used by the edge users of the neighbor cells and may also be used by central users of the neighbor cells.

However, in a process of implementing the technical solutions in the embodiments of the present application, the applicant finds that although the prior art may adjust the allocation of the frequency bands of the cell edges to a certain extent, after borrowing the sub-bands, the orthogonality of the sub-bands is destroyed, and thus interference is brought to the central users of the cells.

Document WO 2013/026417 A1 relates to a method for dynamic frequency spectrum optimization. Specifically, paragraph [0028] of the document discloses: "generating multiple frequency spectrum allocation schemes for the multiple cells according to the traffic distribution of the terminal(s) in each cell, wherein each frequency spectrum allocation scheme includes frequency spectrum(s) allocated for each cell".

In addition, document US 2006/212588 A1 discloses a method of flexible frequency allocation. Specifically, the abstract of the document discloses that "in the method of flexible frequency allocation, at least a portion of a frequency spectrum for a lower priority class of applications is allocated to a higher priority class of applications if overload of frequency spectrum for the higher priority class of application is detected, an emergency situation occurs, etc".

### SUMMARY

The invention is defined by independent claims. Embodiments are defined in the dependent claims.

The present application provides a spectrum allocation method and a spectrum allocation apparatus, for solving the technical problem in the prior art that the spectrum allocation at the operation and maintenance stage is basically invariable to fail to self-adapt to the change of a cell performance indicator.

A first aspect of the present application provides a spectrum allocation method, including: determining a cell cluster, wherein the cell cluster includes at least one first cell whose current performance indicator is smaller than a preset threshold and a neighbor cell of the first cell;

determining a target performance indicator of each spectrum allocation solution corresponding to the cell cluster; determining a first spectrum allocation solution in each spectrum allocation solution according to the target performance indicator of each spectrum allocation solution; and allocating a spectrum for each cell in the cell cluster according to the first spectrum allocation solution, wherein the determining the target performance indicator of the each spectrum allocation solution corresponding to the cell cluster specifically comprises: for one spectrum allocation solution, determining an estimated load of a central area and an edge area of the each cell according to a service demand of the central area and the edge area of the each cell and the spectrum allocation solution; and determining a target performance indicator of each cell based on the estimated load of the central area and the edge area of the each cell, and using the target performance indicator of the each cell as the target performance indicator of the spectrum allocation solution.

A second aspect of the present application provides a spectrum allocation apparatus, including: a first determining module, configured to determine a cell cluster, wherein the cell cluster includes at least one first cell whose current performance indicator is smaller than a preset threshold and a neighbor cell of the first cell; a second determining module, configured to determine a target performance indicator of each spectrum allocation solution corresponding to the cell cluster; a third determining module, configured to determine a first spectrum allocation solution in each spectrum allocation solution according to the target performance indicator of each spectrum allocation solution; and an allocating module, configured to allocate a spectrum for each cell in the cell cluster according to the first spectrum allocation solution, wherein the second determining module is specifically configured to: for one spectrum allocation solution, determine an estimated load of a central area and an edge area of the each cell according to a service demand of the central area and the edge area of the each cell and the spectrum allocation solution; and determine a target performance indicator of each cell based on the estimated load of the central area and the edge area of the each cell, and use the target performance indicator of the each cell as the target performance indicator of the spectrum allocation solution.

One or more technical solutions provided in the embodiments of the present application at least have the following technical effects or advantages.

In the embodiments of the present application, the concept of the cell cluster is proposed, the cell cluster is determined, the cell cluster includes at least one first cell whose current performance indicator is smaller than the preset threshold and the neighbor cell of the first cell, then for each such cell cluster, the target performance indicator of each spectrum allocation solution corresponding to the cell cluster is determined, the first spectrum allocation solution is determined in each spectrum allocation solution according to the determined target performance indicator of each spectrum allocation solution, and the spectrum is allocated for each cell in the cell cluster according to the first spectrum allocation solution. Therefore, in the embodiments of the present application, firstly, since the spectrum allocation is carried out on the cell cluster, the spectrum allocation is carried out on the cell whose current performance indicator is smaller than the preset threshold and the neighbor cell thereof, namely the cell having worse performance indicator, the worse performance indicator indicates that the service demand is larger, and the network load is heavier, so that spectrum reallocation is required; secondly, since each cell cluster corresponds to a plurality of spectrum allocation solutions, the target performance indicator of each spectrum allocation solution is determined, the spectrum allocation solution is selected in each spectrum allocation solution according to the determined target performance indicator of each spectrum allocation solution, and then the spectrum is allocated, therefore in the embodiments of the present application, the spectrum allocation solution may be dynamically adjusted according to the change of the performance indicator, and problems caused by dynamic spectrum adjustment may also be avoided, for example, the interference problem brought by dynamic FFR mentioned in the background.

## BRIEF DESCRIPTION OF DRAWINGS

Fig.1 is a flowchart of a method for controlling an electronic device in a first embodiment of the present application;
Fig.2 is a schematic diagram of a cell cluster in an embodiment of the present application;
Fig.3a to Fig.3d are schematic diagrams of a determination process of a spectrum allocation solution in an embodiment of the present application;
Fig.4a to Fig.4c are schematic diagrams of a determination process of a spectrum allocation solution in another embodiment of the present application;
Fig.5 is a flowchart of particle swarm optimization in an embodiment of the present application;
Fig.6 is a functional block diagram of a spectrum allocation apparatus in a second embodiment of the present application;
Fig.7 is a conceptual graph of an example of hardware implementation of a spectrum allocation apparatus in a third embodiment of the present application.

## DESCRIPTION OF EMBODIMENTS

Embodiments of the present application provide a spectrum allocation method and a spectrum allocation apparatus, for solving a technical problem in the prior art that spectrum allocation at an operation and maintenance stage is basically invariable to fail to self-adapt to change of a performance indicator.

A technical solution in an embodiment of the present application is used for solving the above technical problem, and an overall thinking is as follows.

In an embodiment of the present application, a concept of cell cluster is proposed, the cell cluster is determined, the cell cluster includes at least one first cell whose current performance indicator is smaller than a preset threshold and a neighbor cell of the first cell, then for each such cell cluster, a target performance indicator of each spectrum allocation solution corresponding to the cell cluster is determined, a first spectrum allocation solution is determined in each spectrum allocation solution according to the determined target performance indicator of each spectrum allocation solution, and a spectrum is allocated for each cell in the cell cluster according to the first spectrum allocation solution. Therefore, in the embodiments of the present application, firstly, since the spectrum allocation is carried out on the cell cluster, the spectrum allocation is carried out on the cell whose current performance indicator is smaller than the preset threshold and the neighbor cell thereof, namely the cell having worse performance indicator, the worse performance indicator indicates that the service demand is larger, and the network load is heavier, so that spectrum reallocation is required; secondly, since each cell cluster corresponds to a plurality of spectrum allocation solutions, the target performance indicator of each spectrum allocation solution is determined, the spectrum allocation solution is selected in each spectrum allocation solution according to the determined target performance indicator of each spectrum allocation solution, and then the spectrum is allocated, therefore in the embodiments of the present application, the spectrum allocation solution may be dynamically adjusted according to the change of the performance indicator, and problems caused by dynamic spectrum adjustment may also be avoided, for example, the interference problem brought by dynamic FFR mentioned in the background.

In order to make the purposes, technical solutions and advantages of the embodiments of the present application more clear, a clear and complete description of technical solutions in the embodiments of the present application will be given below, in combination with the accompanying drawings in the embodiments of the present application. Apparently, the embodiments described below are merely a part, but not all, of the embodiments of the present application. All of other embodiments, obtained by those of ordinary skill in the art based on the embodiments of the present application without any creative effort, fall into the protection scope of the present application.

Various aspects are described in this paper in combination with the spectrum allocation apparatus and/or a base station.

For example, the spectrum allocation apparatus may be a functional entity, may be a separate physical device and may also be integrated in an existing network element, such as a base station, a base station controller, a network management system.

The base station (e.g., an access point) may refer to a device which communicates with a wireless terminal via one or more sectors on an air interface in an access network. The base station may be used for mutually converting a received air frame and an IP packet and servers as a router between the wireless terminal and the rest part of the access network, wherein the rest part of the access network may include an internet protocol (IP) network. The base station may also coordinate the attribute management of the air interface. For example, the base station may be a base station (BTS, base transceiver station) in CDMA, may also be a base station (NodeB) in WCDMA and may also be an evolutional base station (NodeB or eNB or e-NodeB, evolutional Node B) in LTE, and this is not limited in the present application.

In addition, the term "and/or" in this paper is merely an association relationship describing associated objects and expresses that three relationships may exist. For example, A and/or B may express three conditions that A singly exists, A and B simultaneously exist and B singly exists. In addition, the character "/" in this paper generally expresses an "or" relationship of front and back associated objects.

Preferred embodiments of the present application will be illustrated below in detail in combination with the accompanying drawings.

**First embodiment**

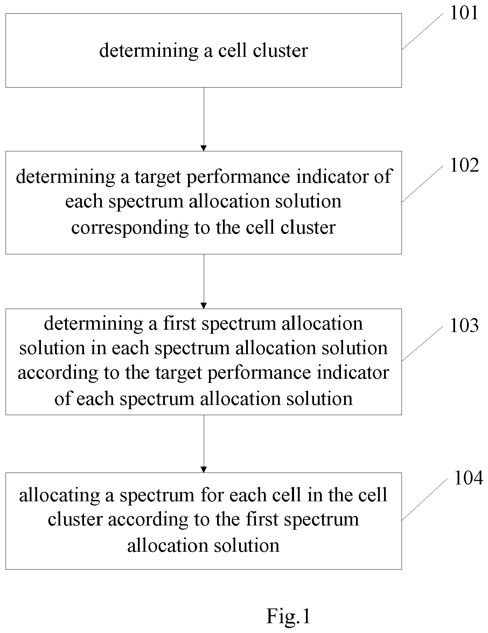

The embodiment provides a spectrum allocation method. Please refer to Fig.1, it is a flowchart of the spectrum allocation method, and the method includes followings.

Step 101: determining a cell cluster, wherein the cell cluster includes at least one first cell whose current performance indicator is smaller than a preset threshold and a neighbor cell of the first cell;

Step 102: determining a target performance indicator of each spectrum allocation solution corresponding to the cell cluster;

Step 103: determining a first spectrum allocation solution in each spectrum allocation solution according to the target performance indicator of each spectrum allocation solution; and

Step 104: allocating a spectrum for each cell in the cell cluster according to the first spectrum allocation solution.

Wherein, in a specific implementation of the step 101, different implementation manners may be provided and will be respectively introduced below in detail.

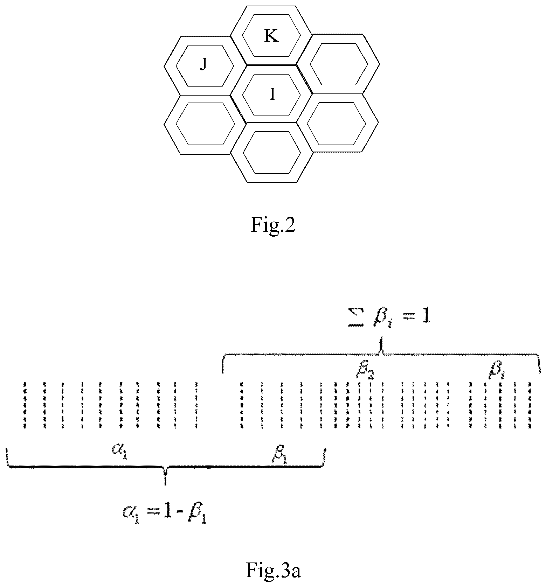

In an embodiment, the cell cluster is determined by the following steps: determining the first cell; forming a cell group by the first cell and the neighbor cell of the first cell; and if the cell group has no neighbor cell group, determining the cell group as a cell cluster; if the cell group has a neighbor cell group, determining the cell group and the neighbor cell group of the cell group as a cell cluster. In the embodiment, the cell group has the neighbor cell group, which indicates that an edge cell of one cell group is the same as or adjacent to the edge cell of another cell group. For example, as shown in Fig.2, assuming that the determined first cell is a cell I, then a neighbor cell J, a neighbor cell K, other first layer of neighbor cells adjacent to the cell I and the cell I are formed into one cell group, and one cell group is shown in Fig.2. Of course, in other embodiments, it is not limited to the first layer of neighbor cells, and two layers of neighbor cells may be provided.

In another embodiment, the cell cluster is determined by the following steps: determining the first cell; and forming the cell cluster by the first cell and the neighbor cell of the first cell. Different from the foregoing embodiment, in the embodiment, it is not judged whether the cell group has a neighbor cell group.

In the above two embodiments, the first cell may be specifically determined by the following steps: receiving the current performance indicators (referred to as current KPI hereinafter) reported by the cells; and determining the first cell whose current KPI is smaller than the preset threshold based on the reported current KPIs.

Wherein, the current KPIs may be periodically counted and/or reported by the cells, and of course, may also be counted and/or reported after satisfying a certain trigger condition, for example, when a trigger instruction is sent to the cells. The current KPIs may include, but not limited to, a cell load, a cell call drop rate, a cell block rate, a cell throughput and a cell coverage rate.

It can be seen from the above description that, the grouping is dynamic, sub-band granularity in the group may be arbitrary, and the degree of freedom is larger, thereby being better to the optimization performance of spectrum allocation.

When the numbers of first cells included in the cell cluster are different, how to determine each spectrum allocation solution corresponding to the cell cluster will be introduced below in detail.

In a first implementation manner, when the cell cluster includes one first cell, assuming that the system bandwidth is W and the system bandwidth used by each cell is the same, then please refer to Fig.3a, in Fig.3a, $\alpha_1$ expresses the proportion of a sub-bandwidth used by a central user of the cell in the system bandwidth, $\beta_1$, $\beta_2$...$\beta_i$ express the proportions of sub-bandwidths used by edge users of the cell in the system bandwidth, and Fig.3a expresses that the sum of the sub-bandwidth used by the central user and the sub-bandwidths used by the edge users of each cell is equal to the system bandwidth; and the sum of the sub-bandwidths used by the edge users of neighbor cells is equal to the system bandwidth.

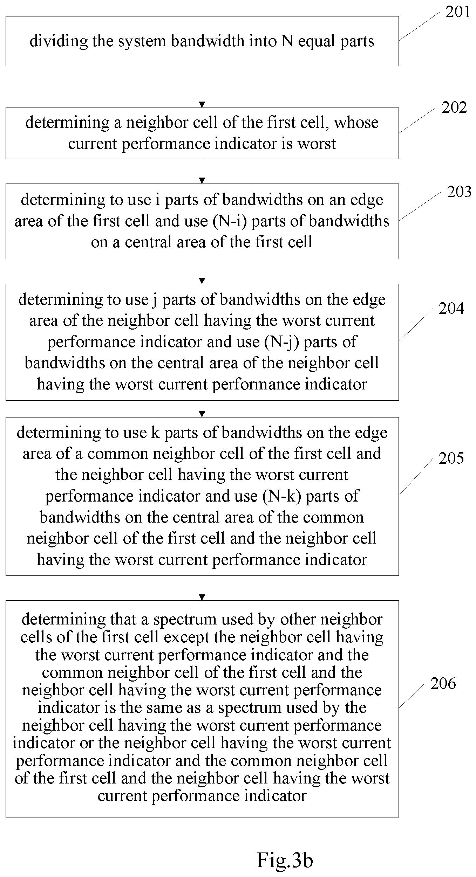

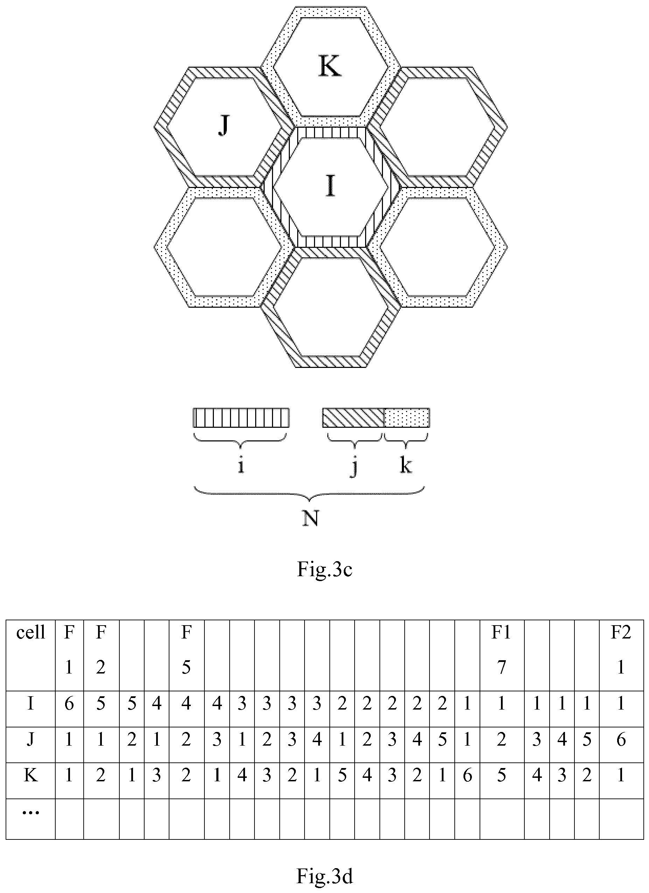

Then, please refer to Fig.3b and Fig.3c, each spectrum allocation solution corresponding to the cell cluster is determined by the following steps.

Step 201: dividing the system bandwidth into N equal parts, wherein N is an integer larger than 2;

Step 202: determining a neighbor cell of the first cell, whose current performance indicator is worst;

Step 203: determining to use i parts of bandwidths on an edge area of the first cell and use (N-i) parts of bandwidths on a central area of the first cell, wherein i is smaller than or equal to N-2 and is larger than or equal to 1, and i is an integer;

Step 204: determining to use j parts of bandwidths on the edge area of the neighbor cell having the worst current performance indicator and use (N-j) parts of bandwidths on the central area of the neighbor cell having the worst current performance indicator, wherein j is larger than or equal to 1 and is smaller than or equal to N-i-1, and j is an integer;

Step 205: determining to use k parts of bandwidths on the edge area of a common neighbor cell of the first cell and the neighbor cell having the worst current performance indicator and use (N-k) parts of bandwidths on the central area of the common neighbor cell of the first cell and the neighbor cell having the worst current performance indicator, wherein k=N-i-j; and

Step 206: determining that a spectrum used by other neighbor cells of the first cell except the neighbor cell having the worst current performance indicator and the common neighbor cell of the first cell and the neighbor cell having the worst current performance indicator is the same as a spectrum used by the neighbor cell having the worst current performance indicator or the neighbor cell having the worst current performance indicator and the common neighbor cell of the first cell and the neighbor cell having the worst current performance indicator.

In practical application, the i parts of bandwidths in the step 203 are continuous i parts of bandwidths in sequence; the j parts of bandwidths in the step 204 are continuous j parts of bandwidths after the ith part; and the k parts of bandwidths in the step 205 are continuous k parts of bandwidths after the (i+j)th part. Therefore, since the bandwidths used by the edge cells of neighbor cells are different, same frequency interference between the cells may be avoided, of course, in other embodiments, the i parts of bandwidths, the j parts of bandwidths and the k parts of bandwidths may also be discontinuous, and the same frequency interference may also be avoided in other manners.

A continuous bandwidth allocation manner is taken as an example for illustration below, and in this case, the

$$\frac{(N-2)(N-1)}{2} .$$

size of a spectrum allocation solution set is

Herein, it is assumed that N is equal to 8, namely, the system bandwidth is divided into 8 equal parts, because the system bandwidth may be continuous and may also be discrete, so for the divided N equal parts, the bandwidth of each equal part may be continuous and may also be discrete, but the effective bandwidth of each equal part is the same, for example, the first equal part of bandwidth is a continuous bandwidth and is 724-750MHz, the effective bandwidth is 26MHz, the second equal part of bandwidth is discrete and is respectively 751-760MHz, 770-786MHz, and the effective bandwidth is 26MHz as well.

Further, the size of the spectrum allocation solution set may be calculated as 21 through the formula

$$\frac{(N-2)(N-1)}{2},$$

that is, 21 spectrum allocation solutions are available in total. Then, the step S202 is executed, namely, the neighbor cell (referred to as cell J hereinafter) having the worst current performance indicator among the neighbor cells of the first cell (referred to as first cell I) is determined; and further, the common neighbor cell of the first cell I and the cell J is referred to as a cell K, as shown in Fig.3c.

Then, the allocation bandwidth is determined for each cell, namely, the step 203 is executed to determine that the first cell I selects to use continuous i parts of bandwidths on the edge area of the first cell I and use (N-i) parts of bandwidths on the central area of the first cell I in sequence, wherein i ranges from N-2 to 1 in sequence, and the unit of each change is 1; in the embodiment, it is still taken as an example for illustration that N is equal to 8, firstly, i is equal to 6, then the first cell I may select continuous 6 equal parts of bandwidths, for example, the first part to the sixth part are used on the edge area of the first cell I, and two parts of bandwidths, namely the seventh part and the eighth part of bandwidths are used on the central area of the first cell I. Secondly, i is equal to 5, then the first cell I may select continuous 5 equal parts of bandwidths, for example, the first part to the fifth part are used on the edge area of the first cell I, and three parts of bandwidths, namely the sixth part to the eighth part of bandwidths are used on the central area of the first cell I, and so on, until i is equal to 1 in a loop.

For the cell J, the step 204 is executed, namely, determining that the cell J selects to use continuous j parts of bandwidths after the ith part on the edge area of the cell J and use (N-j) parts of bandwidths on the central area of the cell J, wherein j ranges from 1 to N-i-1 in sequence, and the unit of each change is 1; stilling taking the forgoing example as an example for illustration, firstly, when i is equal to 6, j may be equal to 1, and then the cell J may choose continuous 1 part of bandwidth to use after the sixth part on the edge area of the cell J, namely use the seventh part of bandwidths on the edge area, and use the rest 7 parts of bandwidths on the central area of the cell J. Secondly, when i is equal to 5, j may be equal to 1 and 2, and when j is equal to 1, the cell J may choose continuous 1 part of bandwidth to use after the fifth part on the edge area of the cell J, namely use the sixth part of bandwidth on the edge area, and use the rest 7 parts of bandwidths on the central area of the cell J; and when j is equal to 2, the cell J may choose continuous 2 parts of bandwidths to use after the fifth part on the edge area of the cell J, namely use the sixth part and seventh part of bandwidths on the edge area, and use the rest 6 parts of bandwidths on the central area of the cell J.

For the cell K, the step 205 is executed, namely, determining that the cell K selects to use continuous k parts of bandwidths after the (i+j)th part on the edge area of the cell K and use (N-k) parts of bandwidths on the central area of the cell K, wherein k=N-i-j. Stilling taking the forgoing example as an example for illustration, firstly, when i is equal to 6, j may be equal to 1, then k may be equal to 1, and then the cell K selects to use continuous 1 part of bandwidths after the seventh part on the edge area of the cell K, namely use the eighth part of bandwidths on the edge area of the cell K, and use the rest 7 parts of bandwidths on the central area of the cell K. Secondly, when i is equal to 5, j may be equal to 1 and 2, and when j is equal to 1, k may be equal to 2, then the cell K selects to use continuous 2 parts of bandwidths after the sixth part on the edge area of the cell K, namely use the seventh part and the eighth of bandwidths on the edge area of the cell K, and use the rest 6 parts of bandwidths on the edge area of the cell K. When j is equal to 2, k is equal to 1, then the cell K selects to use continuous 1 part of bandwidths after the seventh part on the edge area of the cell K, namely use the eighth part of bandwidths on the edge area of the cell K, and use the rest 7 parts of bandwidths on the central area of the cell K.

The spectrums used by the other neighbor cells of the first cell I except the cell J and the cell K are the same as the spectrum used by the cell J or the cell K, namely the allocation solutions are the same as that of the cell J or the cell K. Specifically, for example, the spectrums used by the other neighbor cells adjacent to the cell J are the same as the spectrum used by the cell K, and the spectrums used by the neighbor cells adjacent to the cell K are the same as the spectrum used by the cell J.

According to the process described above, after two stages of circulation of i and j are finished, a spectrum allocation solution table as shown in Fig.3d may be obtained, 21 allocation solutions are available in total, wherein Fig.3d shows the bandwidth allocation condition of the edge area of each cell, please refer to Fig.3c together, as shown in a spectrum allocation solution F2 (5, 1, 2), the cell I uses the first to the fifth parts of bandwidths on the edge area (a dash area in Fig.3c), the cell J uses the sixth part of bandwidths on the edge area, the cell K uses the seventh part to the eighth part of bandwidths on the edge area, and other neighbor cells of the cell I use the sixth part of bandwidths or the seventh part to the eighth part of bandwidths on the edge areas.

In the above embodiment, the value of N may be determined according to actual conditions, the larger the N is, the smaller the granularity of spectrum allocation is, and the larger the degree of freedom is. Of course, under normal circumstances, the minimum bandwidth of each sub-band is the bandwidth of a subcarrier, so that the maximum value of N is the number of subcarriers of each cell.

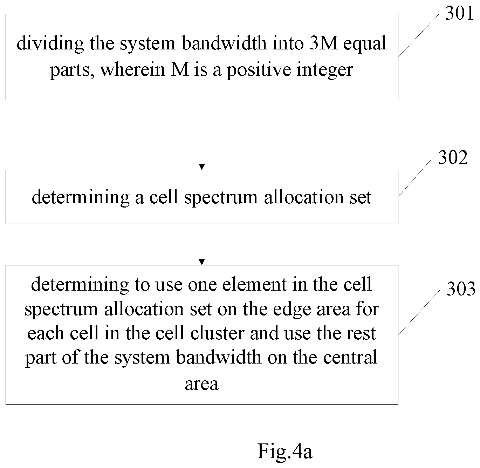

In a second implementation manner, when the cell cluster includes at least two first cells, namely the service demand is larger, at this time, the interference between the cells is larger, the network load is heavier, cells requiring spectrum reallocation are increased, coarse-grained spectrum allocation is necessary at this time, and please refer to Fig.4a, each spectrum allocation solution corresponding to the cell cluster is determined by the following steps.

Step 301: dividing the system bandwidth into 3M equal parts, wherein M is a positive integer;

Step 302: determining a cell spectrum allocation set; and

Step 303: determining to use one element in the cell spectrum allocation set on the edge area for each cell in the cell cluster and use the rest part of the system bandwidth on the central area.

Wherein, in the step 301, it is also assumed that the system bandwidth is W and the system bandwidth used by each cell is the same, and then the system bandwidth is divided into 3M equal parts, wherein the coefficient 3 may be used for ensuring orthogonality of the sub-bands used by neighbor cells as much as possible, so other coefficient values may also be set herein, as long as the orthogonality of the sub-bands used by neighbor cells may be guaranteed as much as possible, and then the interference between the edge areas may be avoided.

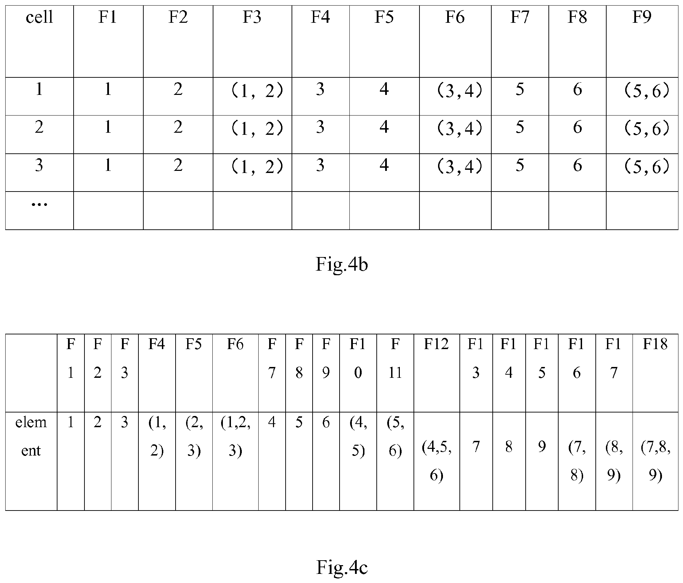

Then the step 302 is executed, namely determining the cell spectrum allocation set. In an embodiment, the

$$3\sum_{n=0}^{M-1}(M-n),$$

size of the cell spectrum allocation set is determined through a formula taking it as an example that M is equal to 2, the system bandwidth is divided into 6 equal parts, then the cell spectrum allocation set has 9 elements (Fig.4b), and if M is equal to 3, the system bandwidth is divided into 9 equal parts, then the cell spectrum allocation set has 18 elements. Of course, in practical application, the cell spectrum allocation set may also be determined by other methods, the value of M may also be determined according to actual demand, the value of M mainly refers to the size of the cell cluster, namely the number of cells in the cell cluster, when the number of cells is larger, the value of M should not be too large, and under normal circumstances, the value of M is properly 4.

When M=3, the cell spectrum allocation set refers to what is shown in Fig.4c.

Then, the step 303 is executed, namely determining to use one element in the cell spectrum allocation set on the edge area for each cell in the cell cluster and use the rest part of the system bandwidth on the central area, for example, referring to Fig.4b, the spectrum allocation solution F2 indicates that a cell 1 selects to use the second part of bandwidths as the spectrum of the edge area and use the other 5 parts of bandwidths on the central area; and F6 (3, 4) indicates that the cell 1 selects to use the third part and the fourth part of bandwidths as the spectrum of the edge area and use the other 4 parts of bandwidths on the central area. For a cell 2 and a cell 3, such an allocation solution is also applicable.

The cell cluster and each spectrum allocation solution corresponding to the cell cluster have been introduced above, and the specific implementation process of the spectrum allocation method in Fig.1 will be specifically introduced below.

The step 102 specifically includes: determining the target performance indicator of each spectrum allocation solution corresponding to the cell cluster according to the service demand of each cell in the cell cluster; wherein the service demand is specifically a guaranteed bit rate GBR service demand and/or a non-guaranteed bit rate non-GBR service demand. Of course, the service demand may also be other service demand.

Before the step 102, the method in the embodiment further includes: obtaining the service demand of each cell in the cell cluster, for example, being periodically reported by a base station.

For a GBR service, the service demand thereof is basically determined, when a user requests the GBR service, the request information includes the necessary guaranteed bit rate, according to the position information of the user, which pixel (pixel) the user is located in may be determined, therefore based on the service request of the user, the GBR service demand of each pixel in each cell may be obtained, and thus the GBR service demand of sub-areas (the central area and the edge area) of each cell may be obtained, namely, $D_{GBR,r}$, $r = 1,2$ respectively expresses the central area and the edge area. Wherein, in practical application, multiple division methods of the central area and the edge area are available, for example, the pixel having a signal to noise ratio larger than a certain threshold belongs to the central area, otherwise, belonging to the edge area; and as another example, the pixel having receiving signal strength larger than a certain threshold belongs to the central area, and otherwise, belonging to the edge area.

For a non-GBR service, the non-GBR service demand may be obtained in multiple manners, for example, based on the information of a scheduler, for example, the throughput of the scheduled non-GBR service, the non-GBR service demand of the sub-areas of each cell may be obtained, therefore, a total service demand $D_{s,r} \in \{D_{nGBR,r}, D_{GBR,r}\}$

of the sub-areas of each cell is obtained in combination with the GBR service demand, wherein s expresses a service type, for example, the GBR service or the non-GBR service.

The step 102 specifically includes: for one spectrum allocation solution, determining estimated load of the central area and the edge area of each cell according to the service demand of the central area and the edge area of each cell and the spectrum allocation solution; and determining the target performance indicator of each cell based on the estimated load of the central area and the edge area of each cell, and using the target performance indicator of each cell as the target performance indicator of the spectrum allocation solution.

Specifically, for example, assuming that three parameters $G_{c,r}$, $N_{c,r}$ and $H_{r,r'}$ are introduced into the sub-area r of a cell c, $G_{c,r}$ refers to a coefficient related to the service demand of the sub-area r of the cell c; $N_{c,r}$ refers to a coefficient related to the service demand and noise of the sub-area r of the cell c; $H_{r,r'}$ refers to a coefficient related to the service demand and interference of the sub-area r of the cell c; and r' refers to a sub-area of a neighbor cell d of the cell r, then,

$$G_{c,r} = \sum_{s \in S} \sum_{p \in r} \frac{T_{s,p} D_{s,p}}{k_r^{sch} \eta^{BW}} \quad (1)$$

$$N_{c,r} = \sum_{s \in S} \sum_{p \in r} \frac{T_{s,p} \eta^{SINR} D_{s,p} P^n}{k_r^{sch} \eta^{BW} P_{c,r} g_{r,p}} \quad (2)$$

$$H_{r,r'} = \sum_{s \in S} \sum_{p \in r} \sum_{r' \in d} \frac{T_{s,p} \eta^{SINR} D_{s,p} P_{d,r'} g_{r',p}}{k_r^{sch} \eta^{BW} P_{c,r} g_{r,p}} \quad (3)$$

Wherein, $D_{s,p}$ refers to a data rate necessary for a service s of the pixel p, $T_{s,p}$ refers to the number of activated users of the service s of the pixel p, and $T_{s,p} D_{s,p}$ expresses the service volume of the service s of the pixel p. $P_{c,r}$ and $P_{d,r'}$ respectively refer to the transmitting power of the sub-areas r and r', $g_{r,p}$ and $g_{r',p}$ respectively refer to the channel gains of base stations of the sub-areas r and r' to the pixel p, for example, may be obtained according to sending power and receiving power. $k_r^{sch}$ ; $\eta^{BW}$ and $\eta^{SINR}$ respectively refer to coefficients corresponding to scheduling, bandwidth and signal to noise ratio.

Then, the estimated load of the GBR service and the non-GBR service of the sub-area r are:

$$\tilde{\rho}_{c,r} = \sum_{W_{c,r}} \left( \frac{G_{c,r}}{W_{unit}} f \left( \frac{N_{c,r}}{G_{c,r}} + \sum_{d \in I_c} \frac{H_{r,r'} \min(\hat{\rho}_{d,r},1)}{G_{c,r}} \right) \right) \quad (4)$$

wherein, $W_{unit} = W/N$ refers to the bandwidth of each sub-band, $W_{c,r}$ refers to a sub-band set of the sub-area r of the

$$f(x) = \frac{\log(2)}{\ln(1 + 1/x)}.$$

cell c, and the function f is

Further, actual load of the GBR service and the non-GBR service may be obtained, $\rho_{c,r} = \min(1, \tilde{\rho}_{c,r})$.

In a specific implementation process, the determining the target performance indicator of each cell based on the estimated load of each cell specifically includes:

on a first aspect, for one cell, if the service demand of the cell includes the GBR service demand, obtaining the estimated load of the GBR service based on the estimated load of the central area and the edge area of each cell; and obtaining the target performance indicator of the GBR service based on the estimated load of the GBR service, and using the target performance indicator of the GBR service as the target performance indicator of the cell.

At first, the estimated load $\widetilde{\rho}_{c,r}^{GBR}$ of the GBR service of the sub-area r of the cell c is obtained based on the estimated load of the central area and the edge area of the cell, for example, is specifically obtained through a formula

$$\widetilde{\rho}_{c,r}^{GBR} = \tau_{c,r}\widetilde{\rho}_{c,r}$$ , wherein, $\tau_{c,r} = D_{GBR,r}/(D_{nGBR,r} + D_{GBR,r})$.

Then, the target KPI of the GBR service may be obtained based on the estimated load of the GBR service of the sub-area r of the cell c, for example, the call drop and block rate is:

$$CDBR_r = \frac{\sum_c \max\left(MC_{c,r}^{GBR} \cdot \left(1 - 1/\widetilde{\rho}_{c,r}^{GBR}\right), 0\right)}{\sum_c MC_{c,r}^{GBR}} \quad (5)$$

$$MC_{c,r}^{GBR} = \sum_{p \in r} T_p^{GBR}$$

wherein, refers to the user number of the GBR service of the sub-area r of the cell c.

On a second aspect, if the service demand of the cell includes the non-GBR service demand, the target performance indicator of the non-GBR service is obtained based on the estimated load of the GBR service and the estimated load $\widetilde{\rho}_{c,r}$ of the sub-area r of the cell c, and the target performance indicator of the non-GBR service is used as the target performance indicator of the cell.

In the embodiment, for example, the target performance indicator is a throughput, and then the throughput $THP_{c,r}$ may be calculated through the following formula:

$$THP_{c,r} = \sum_{W_{c,r}} \frac{\left(\min\left(c_{eff}\widetilde{\rho}_{c,r}, 1\right) - \min(c_{eff}\widetilde{\rho}_{c,r}^{GBR}, 1)\right) \cdot W_{unit} \cdot \sum_{p \in c,r} T_p^{nGBR} R_p(\widetilde{\rho})}{MC_{c,r}^{nGBR}} \quad (6)$$

$$R_p(\widetilde{\rho}) = k_{c,r}^{sch}\eta^{BW}\log_2\left(1 + \eta^{SINR}\gamma_p(\widetilde{\rho})\right)$$

wherein, the spectral efficiency of the pixel p is and is determined by the signal to noise ratio $\gamma_p(\widetilde{\rho})$.

$$\gamma_p(\widetilde{\rho}) = \frac{P_{c,r}g_{c,p}}{P^{noise} + \sum_{d \neq c}\sum_{r' \in d} P_{d,r'}g_{d,p}\min\left(c_{eff}\widetilde{\rho}_{d,r'}, 1\right)},$$

The signal to noise ratio is the signal to noise ratio is influenced by the interference of the central area and the edge area of the neighbor cell, and the interference is determined by the frequency band allocation conditions of the central area and the edge area of the cell, namely the frequency band allocation conditions in the spectrum allocation solution.

$$MC_{c,r}^{nGBR} = \sum_{p \in r} T_p^{nGBR}$$

Wherein, refers to the user number of the non-GBR service of the sub-area r of the cell c, and $T_p^{nGBR}$ refers to the user number of the non-GBR service of the pixel $p$ . $c_{eff} = \rho_{c,r}^{avg}/\rho_{c,r}$ , $\rho_{c,r}^{avg}$ refers to the average bandwidth utilization rate of the sub-area r of the cell c and may be obtained based on the statistics of the scheduler.

Similarly, other network performance indicator of the cell cluster may be obtained, for example, total load, total SINR, etc.

$$\widetilde{\rho} = \sum_{c}\sum_{r}\widetilde{\rho}_{c,r}$$

The total load:

$$SINR = \sum_{c}\sum_{r}SINR_{c,r}$$

The total SINR:

In another aspect, if the service demand of the cell includes the GBR service demand and the non-GBR service demand, the estimated load of the GBR service is obtained based on the estimated load of the central area and the edge area of the cell, and the target performance indicator of the GBR service is obtained based on the estimated load of the GBR service; and the target performance indicator of the non-GBR service is obtained based on the estimated load of the GBR service and the $\widetilde{\rho}_{c,r}$ and the target performance indicator of the cell is determined according to the estimated load of the GBR service and the target performance indicator of the non-GBR service.

In the embodiment, the target performance indicator of the GBR service and the target performance indicator of the non-GBR service are similar to what is described in the foregoing two aspects, thus will not be repeated redundantly, and the implementation process of determining the target performance indicator of the cell according to the estimated load of the GBR service and the target performance indicator of the non-GBR service will be described below.

A joint target performance indicator, namely joint KPI may be weighted summation of KPI related to the load and/or KPI related to SINR, for example, the weighted summation of throughput and CDBR, and may be achieved by

$$KPI = w_{thp}\sum_{c}\sum_{r}THP_{c,r}^{nor} + w_{cdbr}\sum_{r}(1-CDBR_{r}),$$

the following formula: wherein $w_{thp}$ and $w_{cdbr}$ respectively refer to the weights of the throughput and the call drop block rate and are determined by an operation strategy; and $THP_{c,r}^{nor}$ refers to a normalized throughput.

After the target performance indicator is calculated in the step 102, the step 103 is executed, namely determining the first spectrum allocation solution in each spectrum allocation solution according to the target performance indicator of each spectrum allocation solution.

In a specific implementation process, the spectrum allocation solution corresponding to the optimal target performance indicator may be specifically used as the selected spectrum allocation solution.

Wherein, the optimal target performance may be that a single KPI is the optimal, for example, the call drop and block rate CDBR is the optimal, the throughput THP may also be the optimal and the joint KPI may also be the optimal.

Further, with respect to the condition that the cell cluster includes at least two first cells, since the scale of the cluster is larger, to guarantee the network performance, the optimal spectrum allocation solution is obtained in the embodiment in two steps.

At first, based on multi-target optimization, obtaining a spectrum allocation set with multiple optimal KPIs, namely Pareto Set;

Then, based on the operation strategy, selecting the spectrum allocation solution with the optimal joint KPI from the spectrum allocation set.

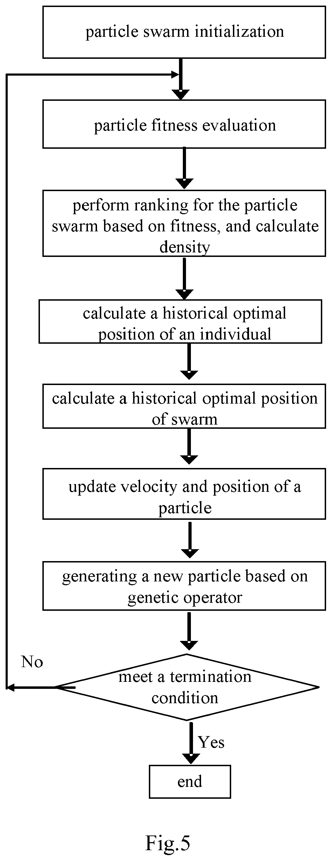

Specifically, based on the multi-target optimization, enhanced particle swarm optimization may be adopted, as shown in Fig.5, fitness is multiple KPIs, including, but not limited to, CDBR of the GRB service, and the THP, the average load, the average SINR and the like of the non-GRB service. The spectrum allocation set with multiple optimal KPIs may be determined through the particle swarm optimization as shown in Fig.5.

Then, based on the operation strategy, the spectrum allocation solution with the optimal joint KPI is selected from the spectrum allocation set, the network has a plurality of KPIs, the operators have different preferences, and this determines the operation strategy. For example, the CDBR of the GRB service and the THP of the non-GRB service are more important than the average load and the average SINR, and the CDBR of the GRB service is more important than the THP of the non-GRB service. Therefore, the spectrum allocation solution with the optimal joint KPI may be selected from the spectrum allocation Pareto Set based on the weights of these KPIs. For example, to obtain the spectrum allocation solution with the optimal joint KPI of the CDBR and the THP, the joint KPI of each spectrum allocation in the spectrum allocation Pareto Set is calculated:

$KPI_{jo\ int} = w_{cdbr}(1-CDBR) + w_{thp}THPR$, wherein, $w_{cdbr}$ and $w_{thp}$ respectively refer to the weights of the CDBR and the THP, and THPR refers to the normalized throughput.

Then, the spectrum allocation solution corresponding to the minimum $KPI_{jo\ int}$ is the selected spectrum allocation solution.

Of course, the above method may also be applied to the situation that the cell cluster includes one first cell.

In a further embodiment, before the step 104, the spectrum allocation method further includes: determining that the optimal target performance indicator is better than the target performance indicator determined in a previous spectrum allocation. Only when this condition is satisfied, the step 104 is executed, and in this way, the implemented spectrum allocation solution may be guaranteed to bring benefits.

Then, the step 104 is executed to allocate the spectrum for each cell in the cell cluster according to the first spectrum allocation solution.

It can be seen from the above description that, in the embodiment of the present application, firstly, since the spectrum allocation is carried out on the cell cluster, the spectrum allocation is carried out on the cell whose current performance indicator is smaller than the preset threshold and the neighbor cell thereof, namely the cell having worse performance indicator, the worse performance indicator indicates that the service demand is larger, and the network load is heavier, so that spectrum reallocation is required; secondly, since each cell cluster corresponds to a plurality of spectrum allocation solutions, the target performance indicator of each spectrum allocation solution is determined in combination with the service demand of each cell, the spectrum allocation solution is selected in each spectrum allocation solution according to the determined target performance indicator of each spectrum allocation solution, and then the spectrum is allocated, therefore in the embodiment of the present application, the spectrum allocation solution may be dynamically adjusted according to the performance indicator, and problems caused by dynamic spectrum adjustment may also be avoided, for example, the interference problem brought by dynamic FFR mentioned in the background.

**Second embodiment**

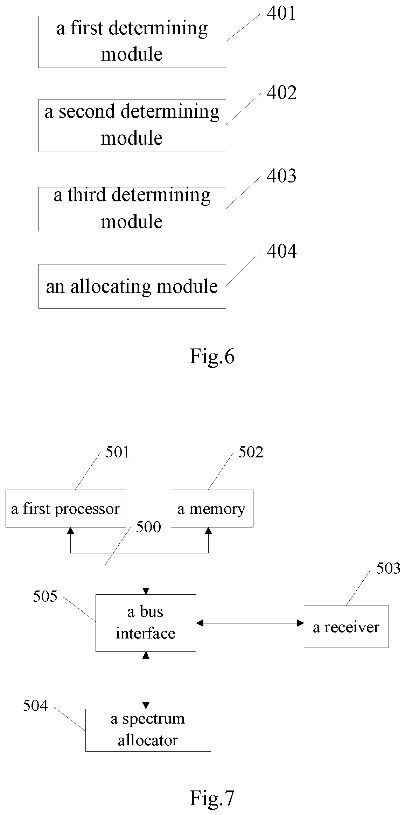

An embodiment of the present application further provides a spectrum allocation apparatus. Please refer to Fig.6, the apparatus includes: a first determining module 401, configured to determine a cell cluster, wherein the cell cluster includes at least one first cell whose current performance indicator is smaller than a preset threshold and a neighbor cell of the first cell; a second determining module 402, configured to determine a target performance indicator of each spectrum allocation solution corresponding to the cell cluster; a third determining module 403, configured to determine a first spectrum allocation solution in each spectrum allocation solution according to the target performance indicator of each spectrum allocation solution; and an allocating module 404, configured to allocate a spectrum for each cell in the cell cluster according to the first spectrum allocation solution.

In an embodiment, the first determining module 401 is specifically configured to: determine the first cell; and form the cell cluster by the first cell and the neighbor cell of the first cell.

In another embodiment, the first determining module 401 is specifically configured to: determine the first cell; form a cell group by the first cell and the neighbor cell of the first cell; and if the cell group has no neighbor cell group, determine the cell group as a cell cluster; if the cell group has a neighbor cell group, determine the cell group and the neighbor cell group of the cell group as a cell cluster.

When the cell cluster includes one first cell; the apparatus further includes: a first dividing module, configured to divide a system bandwidth into N equal parts, wherein N is an integer larger than 2; a fourth determining module, configured to determine a neighbor cell of the first cell, whose current performance indicator is worst; and a fifth determining module, configured to determine to use i parts of bandwidths on an edge area of the first cell and use (N-i) parts of bandwidths on a central area of the first cell, wherein i is smaller than or equal to N-2 and is larger than or equal to 1; determine to use j parts of bandwidths on the edge area of the neighbor cell having the worst current performance indicator and use (N-j) parts of bandwidths on the central area of the neighbor cell having the worst current performance indicator, wherein j is larger than or equal to 1 and is smaller than or equal to N-i-1; determine to use k parts of bandwidths on the edge area of a common neighbor cell of the first cell and the neighbor cell having the worst current performance indicator and use (N-k) parts of bandwidths on the central area of the common neighbor cell of the first cell and the neighbor cell having the worst current performance indicator, wherein k=N-i-j; and determine that a spectrum used by other neighbor cell of the first cell except the neighbor cell having the worst current performance indicator and the common neighbor cell of the first cell and the neighbor cell having the worst current performance indicator is the same as a spectrum used by the neighbor cell having the worst current performance indicator or the common neighbor cell of the first cell and the neighbor cell having the worst current performance indicator.

When the cell cluster includes at least two first cells, the apparatus further includes: a second dividing module, configured to divide the system bandwidth into 3M equal parts, wherein M is a positive integer; a sixth determining module, configured to determine a cell spectrum allocation set; and a seventh determining module, configured to determine to use one element in the cell spectrum allocation set on the edge area for each cell in the cell cluster and use the rest part of the system bandwidth on the central area.

Further, the sixth determining module is specifically configured to determine the cell spectrum allocation set through a formula $3\sum_{n=0}^{M-1}(M-n)$.

In the above embodiments, the second determining module 402 is specifically configured to: determine the target performance indicator of each spectrum allocation solution corresponding to the cell cluster according to the service demand of each cell in the cell cluster; and the service demand is specifically a guaranteed bit rate GBR service demand and/or a non-guaranteed bit rate non-GBR service demand.

In a further embodiment, the second determining module 402 is specifically configured to: for one spectrum allocation solution, determine an estimated load of the central area and the edge area of each cell according to the service demand of the central area and the edge area of each cell and the spectrum allocation solution; and determine the target performance indicator of each cell based on the estimated load of the central area and the edge area of each cell, and use the target performance indicator of each cell as the target performance indicator of the spectrum allocation solution.

Further, the second determining module 402 is specifically configured to determine the estimated load of the central area and the edge area of each cell through the following formula:

$$\widetilde{\rho}_{c,r} = \sum_{W_{c,r}} (\frac{G_{c,r}}{W_{unit}} f(\frac{N_{c,r}}{G_{c,r}} + \sum_{d \in I_c} \frac{H_{r,r'} \min(\hat{\rho}_{d,r},1)}{G_{c,r}}));$$

wherein, $\widetilde{\rho}_{c,r}$ refers to the estimated load of a sub-area r of a cell c, and r=1,2 respectively expresses the central area and the edge area;

$W_{c,r}$ refers to a sub-bandwidth set of the sub-area r of the cell c;

$$f(x) = \frac{\log(2)}{\ln(1+1/x)};$$
the function f is

$W_{unit} = W/N$ refers to the bandwidth of each sub-bandwidth; W refers to the system bandwidth, and N refers to the number of equal parts acquired by dividing the system bandwidth;

$G_{c,r}$ refers to a coefficient related to the service demand of the sub-area r of the cell c;

$N_{c,r}$ refers to a coefficient related to the service demand and noise of the sub-area r of the cell c; and

$H_{r,r'}$ refers to a coefficient related to the service demand and interference of the sub-area r of the cell c.

Further, the second determining module 402 is specifically configured to: for one cell, if the service demand of the cell includes the GBR service demand, obtain the estimated load of a GBR service based on the estimated load of the central area and the edge area of each cell; and obtain the target performance indicator of the GBR service based on the estimated load of the GBR service, and use the target performance indicator of the GBR service as the target performance indicator of the cell;

if the service demand of the cell includes the non-GBR service demand, obtain the target performance indicator of a non-GBR service based on the estimated load of the GBR service and the $\widetilde{\rho}_{c,r}$, and use the target performance indicator of the non-GBR service as the target performance indicator of the cell; and

if the service demand of the cell includes the GBR service demand and the non-GBR service demand, obtain the estimated load of the GBR service based on the estimated load of the central area and the edge area of the cell, and obtain the target performance indicator of the GBR service based on the estimated load of the GBR service; and obtain the target performance indicator of the non-GBR service based on the estimated load of the GBR service and the $\widetilde{\rho}_{c,r}$, and determine the target performance indicator of the cell according to the estimated load of the GBR service and the target performance indicator of the non-GBR service.

In the above embodiments, the third determining module 403 is specifically configured to use the spectrum allocation solution corresponding to the optimal target performance indicator as the selected spectrum allocation solution.

Further, the apparatus further includes: an eighth determining module, configured to determine that the optimal target performance indicator is better than the target performance indicator determined in a previous spectrum allocation.

Various variations and specific embodiments in the spectrum allocation method in the foregoing embodiment of Fig.1 are also applicable to the spectrum allocation apparatus in the embodiment, by means of the detailed description of the foregoing spectrum allocation method, those skilled in the art may clearly understand the implementation method of the spectrum allocation apparatus in the embodiment, and thus will not be described in detail for the concision of the description.

**Third embodiment**

The embodiment provides a spectrum allocation apparatus. Please refer to Fig.7, it is conceptual graph of an example of hardware implementation of the spectrum allocation apparatus, and the spectrum allocation apparatus includes:

a first processor 501, configured to determine a cell cluster, wherein the cell cluster includes at least one first cell whose current performance indicator is smaller than a preset threshold and a neighbor cell of the first cell; determine a target performance indicator of each spectrum allocation solution corresponding to the cell cluster; determine a first spectrum allocation solution in each spectrum allocation solution according to the target performance indicator of each spectrum allocation solution; and a spectrum allocator 504, configured to allocate a spectrum for each cell in the cell cluster according to the first spectrum allocation solution.
wherein, in Fig.7, in a bus architecture (represented by a bus 500), the bus 500 may include any number of buses and bridges which are interconnected, and the bus 500 links one or more processor represented by the first processor 501 with various circuits of a memory represented by a memory 502. The bus 500 may also link various other circuits such as a peripheral device, a voltage stabilizer, a power management circuit and the like, and these are known in the art, thereby will not be further described in this paper. A bus interface 505 provides an interface between the bus 500 and a receiver 503 and/or a sender. The receiver 503 and the sender may be the same element, namely a transceiver, for providing a unit which communicates with other apparatuses on a transmission medium. The bus interface 505 further provides an interface for the spectrum allocator 504.

The first processor 501 is responsible for managing the bus 500 and general processing, and the memory 502 may be used for storing data used by the processor 501 when executing operations.

When the spectrum allocation apparatus is integrated in a base station or a base station controller or a network management system, the receiver 503 further receives data through an antenna and processes the data to recover information which has been modulated on carriers, the information recovered by the receiver 503 is provided for a receiving frame processor, the receiving frame processor analyzes each frame, a receiving processor decodes the frame and provides a successfully decoded control signal for the first processor 501, and if some frames cannot be successfully decoded by the receiving processor, then the first processor 501 may use an ACK and/or NACK protocol to support a retransmission request of those frames.

The first processor 501 may provide various functions, including timing, peripheral interface, voltage regulation, power management and other control functions. The memory 502 may be used for storing data and software of the base station.

In an embodiment, the first processor 501 is further specifically configured to: determine the first cell; and form the cell cluster by the first cell and the neighbor cell of the first cell.

In another embodiment, the first processor 501 is further specifically configured to: determine the first cell; form a cell group by the first cell and the neighbor cell of the first cell; and if the cell group has no neighbor cell group, determine the cell group as a cell cluster; if the cell group has a neighbor cell group, determine the cell group and the neighbor cell group of the cell group as a cell cluster.

When the cell cluster includes one first cell, the apparatus further includes: a second processor configured to divide a system bandwidth into N equal parts, wherein N is an integer larger than 2; determine a neighbor cell of the first cell, whose current performance indicator is worst; determine to use i parts of bandwidths on an edge area of the first cell and use (N-i) parts of bandwidths on a central area of the first cell, wherein i is smaller than or equal to N-2 and is larger than or equal to 1; determine to use j parts of bandwidths on the edge area of the neighbor cell having the worst current performance indicator and use (N-j) parts of bandwidths on the central area of the neighbor cell having the worst current performance indicator, wherein j is larger than or equal to 1 and is smaller than or equal to N-i-1; determine to use k parts of bandwidths on the edge area of a common neighbor cell of the first cell and the neighbor cell having the worst current performance indicator and use (N-k) parts of bandwidths on the central area of the common neighbor cell of the first cell and the neighbor cell having the worst current performance indicator, wherein k=N-i-j; and determine that a spectrum used by other neighbor cell of the first cell except the neighbor cell having the worst current performance indicator and the common neighbor cell of the first cell and the neighbor cell having the worst current performance indicator is the same as a spectrum used by the neighbor cell having the worst current performance indicator or the common neighbor cell of the first cell and the neighbor cell having the worst current performance indicator.

When the cell cluster includes at least two first cells, the apparatus further includes: a third processor configured to divide the system bandwidth into 3M equal parts, wherein M is a positive integer; determine a cell spectrum allocation set; and determine to use one element in the cell spectrum allocation set on the edge area for each cell in the cell cluster and use the rest part of the system bandwidth on the central area.

Further, the third processor is specifically configured to determine the cell spectrum allocation set through a

$$3\sum_{n=0}^{M-1}(M-n).$$
formula

In the above embodiments, the first processor 501 is specifically configured to: determine the target performance indicator of each spectrum allocation solution corresponding to the cell cluster according to the service demand of each cell in the cell cluster; and the service demand is specifically a guaranteed bit rate GBR service demand and/or a non-guaranteed bit rate non-GBR service demand.

In a further embodiment, the first processor 501 is specifically configured to: for one spectrum allocation solution, determine an estimated load of the central area and the edge area of each cell according to the service demand of the central area and the edge area of each cell and the spectrum allocation solution; and determine the target performance indicator of each cell based on the estimated load of the central area and the edge area of each cell, and use the target performance indicator of each cell as the target performance indicator of the spectrum allocation solution.

Further, the first processor 501 is specifically configured to determine the estimated load of the central area and the edge area of each cell through the following formula:

$$\widetilde{\rho}_{c,r} = \sum_{W_{c,r}} (\frac{G_{c,r}}{W_{unit}} f(\frac{N_{c,r}}{G_{c,r}} + \sum_{d \in I_c} \frac{H_{r,r'} \min(\hat{\rho}_{d,r},1)}{G_{c,r}}));$$

wherein, $\widetilde{\rho}_{c,r}$ refers to the estimated load of a sub-area r of a cell c, and r=1,2 respectively expresses the central area and the edge area;

$W_{c,r}$ refers to a sub-bandwidth set of the sub-area r of the cell c;

$$f(x) = \frac{\log(2)}{\ln(1 + 1/x)};$$
the function f is

$W_{unit} = W/N$ refers to the bandwidth of each sub-bandwidth; W refers to the system bandwidth, and N refers to the number of equal parts acquired by dividing the system bandwidth;

$G_{c,r}$ refers to a coefficient related to the service demand of the sub-area r of the cell c;

$N_{c,r}$ refers to a coefficient related to the service demand and noise of the sub-area r of the cell c; and

$H_{r,r'}$ refers to a coefficient related to the service demand and interference of the sub-area r of the cell c.

Further, the first processor 501 is specifically configured to: for one cell, if the service demand of the cell includes the GBR service demand, obtain the estimated load of a GBR service based on the estimated load of the central area and the edge area of each cell; and obtain the target performance indicator of the GBR service based on the estimated load of the GBR service, and use the target performance indicator of the GBR service as the target performance indicator of the cell;

if the service demand of the cell includes the non-GBR service demand, obtain the target performance indicator of a non-GBR service based on the estimated load of the GBR service and the $\widetilde{\rho}_{c,r}$, and use the target performance indicator of the non-GBR service as the target performance indicator of the cell; and

if the service demand of the cell includes the GBR service demand and the non-GBR service demand, obtain the estimated load of the GBR service based on the estimated load of the central area and the edge area of the cell, and obtain the target performance indicator of the GBR service based on the estimated load of the GBR service; and obtain the target performance indicator of the non-GBR service based on the estimated load of the GBR service and the $\widetilde{\rho}_{c,r}$, and determine the target performance indicator of the cell according to the estimated load of the GBR service and the target performance indicator of the non-GBR service.

In a specific implementation process, the first processor 501 is specifically configured to use the spectrum allocation solution corresponding to the optimal target performance indicator as the selected spectrum allocation solution.

Further, the first processor 501 is further specifically configured to determine that the optimal target performance indicator is better than the target performance indicator determined in a previous spectrum allocation.

Wherein, in the above embodiments, the first processor 501, the second processor and the third processor may be separate and may also be the same one.

Various variations and specific embodiments in the spectrum allocation method in the foregoing embodiment of Fig.1 are also applicable to the spectrum allocation apparatus in the embodiment, by means of the detailed description of the foregoing spectrum allocation method, those skilled in the art may clearly understand the implementation method of the spectrum allocation apparatus in the embodiment, and thus will not be described in detail for the concision of the description.

One or more technical solutions provided in the embodiments of the present application at least have the following technical effects or advantages.

In the embodiments of the present application, the concept of the cell cluster is proposed, the cell cluster is determined, the cell cluster includes at least one first cell whose current performance indicator is smaller than the preset threshold and the neighbor cell of the first cell, then for each such cell cluster, the target performance indicator of each spectrum allocation solution corresponding to the cell cluster is determined, the first spectrum allocation solution is determined in each spectrum allocation solution according to the determined target performance indicator of each spectrum allocation solution, and the spectrum is allocated for each cell in the cell cluster according to the first spectrum allocation solution. Therefore, in the embodiments of the present application, firstly, since the spectrum allocation is carried out on the cell cluster, the spectrum allocation is carried out on the cell whose current performance indicator is smaller than the preset threshold and the neighbor cell thereof, namely the cell having worse performance indicator, the worse performance indicator indicates that the service demand is larger, and the network load is heavier, so that spectrum reallocation is required; secondly, since each cell cluster corresponds to a plurality of spectrum allocation solutions, the target performance indicator of each spectrum allocation solution is determined, the spectrum allocation solution is selected in each spectrum allocation solution according to the determined target performance indicator of each spectrum allocation solution, and then the spectrum is allocated, therefore in the embodiments of the present application, the spectrum allocation solution may be dynamically adjusted according to the change of the performance indicator, and problems caused by dynamic spectrum adjustment may also be avoided, for example, the interference problem brought by dynamic FFR mentioned in the background.

Those skilled in the art should understand that the embodiments of the present application may be provided as a method, a system or a computer program product. Accordingly, the present application may adopt the form of a complete hardware embodiment, a complete software embodiment, or an embodiment combining software and hardware. Moreover, the present application may adopt the form of a computer program product which is implemented on one or more computer usable storage media (including, but not limited to, a magnetic disk storage, an optical memory and the like) containing computer usable program codes.

The present invention is described in accordance with the method, the device (system) in the embodiments of the present application and a flowchart and/or a block diagram of the computer program product. It should be understood that, computer program instructions may achieve each flow and/or block in the flowchart and/or the block diagram and the combination of the flows and/or blocks in the flowchart and/or the block diagram. These computer program instructions may be provided to a general-purpose computer, a special-purpose computer, an embedded processor or first processors 501 of other programmable data processing devices to generate a machine, such that the instructions executed by the computers or the first processors 501 of the other programmable data processing devices generate apparatuses used for achieving appointed functions in one flow or multiple flows of the flowchart and/or one block or multiple blocks of the block diagram.

These computer program instructions may also be stored in a computer readable memory capable of guiding the computers or the other programmable data processing devices to work in particular manners, such that the instructions stored in the computer readable memory generate products including instruction apparatuses, and the instruction apparatuses achieve the appointed functions in one flow or multiple flows of the flowchart and/or one block or multiple blocks of the block diagram.

These computer program instructions may also be loaded onto the computers or the other programmable data processing devices, to execute a series of operation steps on the computers or the other programmable data processing devices to produce processing generated by the computers, such that the instructions executed on the computers or the other programmable data processing devices provide steps used for achieving the appointed functions in one flow or multiple flows of the flowchart and/or one block or multiple blocks of the block diagram.

Apparently, those skilled in the art may make various modifications and variations to the present application without departing from the scope of the present application. In this way, if these modifications and variations of the present application belong to the scope of the claims of the present application and the equivalent technology thereof, then the present application is intended to encompass these modifications and variations.

**Claims**

1. A spectrum allocation method, comprising:

    determining (101) a cell cluster, wherein the cell cluster comprises at least one first cell whose current performance indicator is smaller than a preset threshold and a neighbor cell of the first cell;

determining (102) a target performance indicator of each spectrum allocation solution corresponding to the cell cluster;

determining (103) a first spectrum allocation solution in the each spectrum allocation solution according to the target performance indicator of the each spectrum allocation solution; and

allocating (104) a spectrum for each cell in the cell cluster according to the first spectrum allocation solution, wherein the determining (102) the target performance indicator of the each spectrum allocation solution corresponding to the cell cluster specifically comprises:

> for one spectrum allocation solution, determining an estimated load of a central area and an edge area of the each cell according to a service demand of the central area and the edge area of the each cell and the spectrum allocation solution; and
>
> determining a target performance indicator of each cell based on the estimated load of the central area and the edge area of the each cell, and using the target performance indicator of the each cell as the target performance indicator of the spectrum allocation solution.

2. The spectrum allocation method of claim 1, wherein the cell cluster comprises one first cell; and each spectrum allocation solution corresponding to the cell cluster is determined by following steps:

> dividing (201) a system bandwidth into N equal parts, wherein N is an integer larger than 2;
>
> determining (202) a neighbor cell of the first cell, whose current performance indicator is worst;
>
> determining (203) to use i parts of bandwidths on an edge area of the first cell and use (N-i) parts of bandwidths on a central area of the first cell, wherein i is smaller than or equal to N-2 and is larger than or equal to 1;
>
> determining (204) to use j parts of bandwidths on an edge area of the neighbor cell having the worst current performance indicator and use (N-j) parts of bandwidths on a central area of the neighbor cell having the worst current performance indicator, wherein j is larger than or equal to 1 and is smaller than or equal to N-i-1;
>
> determining (205) to use k parts of bandwidths on an edge area of a common neighbor cell of the first cell and the neighbor cell having the worst current performance indicator and use (N-k) parts of bandwidths on a central area of the common neighbor cell of the first cell and the neighbor cell having the worst current performance indicator, wherein k=N-i-j; and
>
> determining (206) that a spectrum used by other neighbor cells of the first cell except the neighbor cell having the worst current performance indicator and the common neighbor cell of the first cell and the neighbor cell having the worst current performance indicator is the same as a spectrum used by the neighbor cell having the worst current performance indicator or used by the common neighbor cell of the first cell and the neighbor cell having the worst current performance indicator.

3. The spectrum allocation method of claim 1 or 2, wherein the cell cluster comprises at least two first cells; and each spectrum allocation solution corresponding to the cell cluster is determined by following steps:

> dividing (301) the system bandwidth into 3M equal parts, wherein M is a positive integer;
>
> determining (302) a cell spectrum allocation set; and
>
> determining (303) to use one element in the cell spectrum allocation set on an edge area for each cell in the cell cluster and use rest part of the system bandwidth on a central area.

4. The spectrum allocation method of claim 3, wherein the cell spectrum allocation set is specifically determined through a formula $3\sum_{n=0}^{M-1}(M-n)$.

5. The spectrum allocation method of any one of claims 1-4, wherein the service demand is specifically a guaranteed bit rate, GBR, service demand and/or a non-guaranteed bit rate, non-GBR, service demand.

6. The spectrum allocation method of any one of claims 1-5, wherein the estimated load of the central area and the edge area of the each cell is specifically determined through a following formula:

$$\widetilde{\rho}_{c,r} = \sum_{W_{c,r}}(\frac{G_{c,r}}{W_{unit}}f(\frac{N_{c,r}}{G_{c,r}}+\sum_{d\in I_c}\frac{H_{r,r'}\min(\hat{\rho}_{d,r},1)}{G_{c,r}}));$$

wherein $\tilde{\rho}_{c,r}$ refers to an estimated load of a sub-area r of a cell c, and r=1,2 respectively expresses the central area and the edge area;

$W_{c,r}$ refers to a sub-bandwidth set of the sub-area r of the cell c;

$$f(x) = \frac{\log(2)}{\ln(1 + 1/x)};$$

the function f is

$W_{unit} = W/N$ refers to a bandwidth of each sub-bandwidth; W refers to the system bandwidth, and N refers to the number of equal parts acquired by dividing the system bandwidth;

$G_{c,r}$ refers to a coefficient related to a service demand of the sub-area r of the cell c;

$N_{c,r}$ refers to a coefficient related to a service demand and noise of the sub-area r of the cell c; and

$H_{r,r'}$ refers to a coefficient related to a service demand and interference of the sub-area r of the cell c.

7. The spectrum allocation method of claim 6, wherein the determining the target performance indicator of the each cell based on the estimated load of the central area and the edge area of the each cell specifically comprises:

for one cell, if the service demand of the cell comprises the GBR service demand, obtaining an estimated load of a GBR service based on the estimated load of a central area and an edge area of the cell; and obtaining a target performance indicator of the GBR service based on the estimated load of the GBR service, and using the target performance indicator of the GBR service as a target performance indicator of the cell;

if the service demand of the cell comprises the non-GBR service demand, obtaining a target performance indicator of a non-GBR service based on the estimated load of the GBR service and the $\tilde{\rho}_{c,r}$ and using a target performance indicator of the non-GBR service as a target performance indicator of the cell; and

if the service demand of the cell comprises the GBR service demand and the non-GBR service demand, obtaining the estimated load of the GBR service based on an estimated load of a central area and an edge area of the cell, and obtaining a target performance indicator of the GBR service based on the estimated load of the GBR service; and obtaining a target performance indicator of the non-GBR service based on the estimated load of the GBR service and the $\tilde{\rho}_{c,r}$ and determining a target performance indicator of the cell according to the estimated load of the GBR service and the target performance indicator of the non-GBR service.

8. The spectrum allocation method of any one of claims 1-7, wherein the determining (101) the cell cluster specifically comprises:

determining the first cell; and

forming the cell cluster by the first cell and the neighbor cell of the first cell.

9. The spectrum allocation method of any one of claims 1-7, wherein the determining (101) the cell cluster specifically comprises:

determining the first cell;

forming a cell group by the first cell and the neighbor cell of the first cell; and

if the cell group has no neighbor cell group, determining the cell group as a cell cluster;

if the cell group has a neighbor cell group, determining the cell group and the neighbor cell group of the cell group as a cell cluster.

10. A spectrum allocation apparatus, comprising:

a first determining module (401), configured to determine a cell cluster, wherein the cell cluster comprises at least one first cell whose current performance indicator is smaller than a preset threshold and a neighbor cell of the first cell;

a second determining module (402), configured to determine a target performance indicator of each spectrum allocation solution corresponding to the cell cluster;

a third determining module (403), configured to determine a first spectrum allocation solution in the each spectrum allocation solution according to the target performance indicator of the each spectrum allocation solution; and

an allocating module (404), configured to allocate a spectrum for each cell in the cell cluster according to the first spectrum allocation solution,

wherein the second determining module (402) is specifically configured to: for one spectrum allocation solution, determine an estimated load of a central area and an edge area of the each cell according to a service demand of the central area and the edge area of the each cell and the spectrum allocation solution; and determine a target performance indicator of each cell based on the estimated load of the central area and the edge area of the each cell, and use the target performance indicator of the each cell as the target performance indicator of the spectrum allocation solution.

11. The spectrum allocation apparatus of claim 10, wherein the cell cluster comprises one first cell; and the spectrum allocation apparatus further comprises:

a first dividing module, configured to divide a system bandwidth into N equal parts, wherein N is an integer larger than 2;
a fourth determining module, configured to determine a neighbor cell of the first cell, whose current performance indicator is worst; and
a fifth determining module, configured to determine to use i parts of bandwidths on an edge area of the first cell and use (N-i) parts of bandwidths on a central area of the first cell, wherein i is smaller than or equal to N-2 and is larger than or equal to 1; determine to use j parts of bandwidths on an edge area of the neighbor cell having the worst current performance indicator and use (N-j) parts of bandwidths on a central area of the neighbor cell having the worst current performance indicator, wherein j is larger than or equal to 1 and is smaller than or equal to N-i-1; determine to use k parts of bandwidths on an edge area of a common neighbor cell of the first cell and the neighbor cell having the worst current performance indicator and use (N-k) parts of bandwidths on a central area of the common neighbor cell of the first cell and the neighbor cell having the worst current performance indicator, wherein k=N-i-j; and determine that a spectrum used by other neighbor cells of the first cell except the neighbor cell having the worst current performance indicator and the common neighbor cell of the first cell and the neighbor cell having the worst current performance indicator is the same as a spectrum used by the neighbor cell having the worst current performance indicator or used by the common neighbor cell of the first cell and the neighbor cell having the worst current performance indicator.

12. The spectrum allocation apparatus of claim 10 or 11, wherein the cell cluster comprises at least two first cells; and the spectrum allocation apparatus further comprises:

a second dividing module, configured to divide the system bandwidth into 3M equal parts, wherein M is a positive integer;
a sixth determining module, configured to determine a cell spectrum allocation set; and
a seventh determining module, configured to determine to use one element in the cell spectrum allocation set on an edge area for each cell in the cell cluster and use rest part of the system bandwidth on a central area.

13. The spectrum allocation apparatus of claim 12, wherein the sixth determining module is specifically configured to determine the cell spectrum allocation set through a formula 3 $3\sum_{n=0}^{M-1}(M-n).$

14. The spectrum allocation apparatus of any one of claims 10-13, wherein the service demand is specifically a guaranteed bit rate, GBR, service demand and/or a non-guaranteed bit rate, non-GBR, service demand.

15. The spectrum allocation apparatus of any one of claims 10-14, wherein the second determining module (402) is specifically configured to determine the estimated load of the central area and the edge area of the each cell through a following formula:

$$\widetilde{\rho}_{c,r}=\sum_{W_{c,r}}(\frac{G_{c,r}}{W_{unit}}f(\frac{N_{c,r}}{G_{c,r}}+\sum_{d\in I_c}\frac{H_{r,r'}\cdot\min(\hat{\rho}_{d,r'},1)}{G_{c,r}}));$$

wherein $\widetilde{\rho}_{c,r}$ refers to an estimated load of a sub-area r of a cell c, and r=1,2 respectively expresses the central area and the edge area;
$W_{c,r}$ refers to a sub-bandwidth set of the sub-area r of the cell c;

$$f(x) = \frac{\log(2)}{\ln(1 + 1/x)};$$

the function f is

$W_{unit} = W/N$ refers to a bandwidth of each sub-bandwidth; W refers to the system bandwidth, and N refers to the number of equal parts acquired by dividing the system bandwidth;

$G_{c,r}$ refers to a coefficient related to a service demand of the sub-area r of the cell c;

$N_{c,r}$ refers to a coefficient related to a service demand and noise of the sub-area r of the cell c; and

$H_{r,r'}$ refers to a coefficient related to a service demand and interference of the sub-area r of the cell c.

16. The spectrum allocation apparatus of claim 15, wherein the second determining module (402) is specifically configured to: for one cell, if the service demand of the cell comprises the GBR service demand, obtain an estimated load of a GBR service based on the estimated load of a central area and an edge area of the cell; and obtain a target performance indicator of the GBR service based on the estimated load of the GBR service, and use the target performance indicator of the GBR service as a target performance indicator of the cell;

if the service demand of the cell comprises the non-GBR service demand, obtain a target performance indicator of a non-GBR service based on the estimated load of the GBR service and the $\tilde{\rho}_{c,r}$ and use a target performance indicator of the non-GBR service as a target performance indicator of the cell; and

if the service demand of the cell comprises the GBR service demand and the non-GBR service demand, obtain the estimated load of the GBR service based on an estimated load of a central area and an edge area of the cell, and obtain a target performance indicator of the GBR service based on the estimated load of the GBR service; and obtain a target performance indicator of the non-GBR service based on the estimated load of the GBR service and the $\tilde{\rho}_{c,r}$ and determine a target performance indicator of the cell according to the estimated load of the GBR service and the target performance indicator of the non-GBR service.

17. The spectrum allocation apparatus of any one of claims 10-16, wherein the first determining module (401) is specifically configured to: determine the first cell; and form the cell cluster by the first cell and the neighbor cell of the first cell.

18. The spectrum allocation apparatus of any one of claims 10-16, wherein the first determining module (401) is specifically configured to: determine the first cell; form a cell group by the first cell and the neighbor cell of the first cell; and if the cell group has no neighbor cell group, determine the cell group as a cell cluster; if the cell group has a neighbor cell group, determine the cell group and the neighbor cell group of the cell group as a cell cluster.

**Patentansprüche**

1. Frequenzzuweisungsverfahren, das Folgendes umfasst:

Bestimmen (101) eines Zellen-Clusters, wobei das Zellen-Cluster mindestens eine erste Zelle, deren Ist-Leistungsindikator kleiner als ein voreingestellter Schwellenwert ist, und eine Nachbarzelle der ersten Zelle enthält;

Bestimmen (102) eines Soll-Leistungsindikators jeder Frequenzzuweisungslösung, die dem Zellen-Cluster entspricht;

Bestimmen (103) einer ersten Frequenzzuweisungslösung in der jeweiligen Frequenzzuweisungslösung gemäß dem Soll-Leistungsindikator der jeweiligen Frequenzzuweisungslösung und

Zuweisen (104) eines Frequenzbandes für jede Zelle im Zellen-Cluster gemäß der ersten Frequenzzuweisungslösung, wobei

das Bestimmen (102) des Soll-Leistungsindikators der jeweiligen Frequenzzuweisungslösung, die dem Zellen-Cluster entspricht, ausdrücklich Folgendes umfasst:

Bestimmen für eine Frequenzzuweisungslösung einer geschätzten Last eines zentralen Bereichs und eines Randbereichs der jeweiligen Zelle gemäß einem Dienstbedarf des zentralen Bereichs und des Randbereichs der jeweiligen Zelle und der Frequenzzuweisungslösung und

Bestimmen eines Soll-Leistungsindikators von jeder Zelle auf der Grundlage der geschätzten Last des zentralen Bereichs und des Randbereichs der jeweiligen Zelle und Verwenden des Soll-Leistungsindikators der jeweiligen Zelle als den Soll-Leistungsindikator der Frequenzzuweisungslösung.

**2.** Frequenzzuweisungsverfahren nach Anspruch 1, wobei das Zellen-Cluster eine erste Zelle enthält und jede Frequenzzuweisungslösung, die dem Zellen-Cluster entspricht, durch die folgenden Schritte bestimmt wird:

Unterteilen (201) einer Systembandbreite in N gleiche Teile, wobei N eine ganze Zahl größer als 2 ist;

Bestimmen (202) einer Nachbarzelle der ersten Zelle, deren Ist-Leistungsindikator am schlechtesten ist;

Bestimmen (203), i Teile von Bandbreiten in einem Randbereich der ersten Zelle zu verwenden und (N - i) Teile von Bandbreiten in einem zentralen Bereich der ersten Zelle zu verwenden, wobei i kleiner als oder gleich N - 2 ist und größer als oder gleich 1 ist;

Bestimmen (204), j Teile von Bandbreiten in einem Randbereich der Nachbarzelle, die den schlechtesten Ist-Leistungsindikator besitzt, zu verwenden und (N - j) Teile von Bandbreiten in einem zentralen Bereich der Nachbarzelle, die den schlechtesten Ist-Leistungsfähigkeitsindikator besitzt, zu verwenden, wobei j größer als oder gleich 1 ist und kleiner als oder gleich N - i - 1 ist;

Bestimmen (205), k Teile von Bandbreiten in einem Randbereich einer gemeinsamen Nachbarzelle der ersten Zelle und der Nachbarzelle, die den schlechtesten Ist-Leistungsindikator besitzt, zu verwenden und (N - k) Teile von Bandbreiten in einem zentralen Bereich der gemeinsamen Nachbarzelle der ersten Zelle und der Nachbarzelle, die den schlechtesten Ist-Leistungsindikator besitzt, zu verwenden, wobei k = N - i - j; und

Bestimmen (206), dass ein Frequenzband, das durch weitere Nachbarzellen der ersten Zelle außer der Nachbarzelle, die den schlechtesten Ist-Leistungsindikator besitzt, und der gemeinsamen Nachbarzelle der ersten Zelle und der Nachbarzelle, die den schlechtesten Ist-Leistungsindikator besitzt, verwendet wird, dasselbe ist, wie ein Frequenzband, das durch die Nachbarzelle, die den schlechtesten Ist-Leistungsindikator besitzt, verwendet wird, oder das durch die gemeinsame Nachbarzelle der ersten Zelle und der Nachbarzelle, die den schlechtesten Ist-Leistungsindikator besitzt, verwendet wird.

**3.** Frequenzzuweisungsverfahren nach Anspruch 1 oder 2, wobei das Zellen-Cluster mindestens zwei erste Zellen enthält; und

jede Frequenzzuweisungslösung, die dem Zellen-Cluster entspricht, durch die folgenden Schritte bestimmt wird:

Unterteilen (301) der Systembandbreite in 3M gleiche Teile, wobei M eine positive ganze Zahl ist;

Bestimmen (302) einer Zellfrequenzzuweisungsgruppe; und

Bestimmen (303), ein Element in der Zellfrequenzzuweisungsgruppe in einem Randbereich für jede Zelle im Zellen-Cluster zu verwenden und den restlichen Teil der Systembandbreite in einem zentralen Bereich zu verwenden.

**4.** Frequenzzuweisungsverfahren nach Anspruch 3, wobei die Zellfrequenzzuweisungsgruppe ausdrücklich durch die Formel $3 \sum_{n=0}^{M-1}(M - n)$ bestimmt ist.

**5.** Frequenzzuweisungsverfahren nach einem der Ansprüche 1-4, wobei die Dienstanforderung ausdrücklich eine Dienstanforderung mit garantierter Bitrate, GBR-Dienstanforderung, und/oder eine Dienstanforderung ohne garantierte Bitrate, Nicht-GBR-Dienstanforderung, ist.

**6.** Frequenzzuweisungsverfahren nach einem der Ansprüche 1-5, wobei die geschätzte Last des zentralen Bereichs und des Randbereichs der jeweiligen Zelle ausdrücklich durch die folgende Formel bestimmt ist:

$$\tilde{\rho}_{c,r} = \sum_{W_{c,r}} \left( \frac{G_{c,r}}{W_{unit}} f\left( \frac{N_{c,r}}{G_{c,r}} + \sum_{d \in I_c} \frac{H_{r,r'} \min(\hat{\rho}_{d,r}, 1)}{G_{c,r}} \right) \right) ;$$

wobei $\tilde{\rho}_{c,r}$ sich auf eine geschätzte Last eines Unterbereichs $r$ einer Zelle $c$ bezieht und $r = 1,2$ den zentralen Bereich bzw. den Randbereich ausdrückt;

$W_{c,r}$ sich auf eine Unterbandbreitengruppe des Unterbereichs $r$ der Zelle $c$ bezieht; die Funktion $f$ $f(x) = \frac{\log(2)}{\ln(1+1/x)}$ ist;

$W_{unit} = W/N$ sich auf eine Bandbreite von jeder Unterbandbreite bezieht; $W$ sich auf die Systembandbreite bezieht und $N$ sich auf die Anzahl von gleichen Teilen, die durch Unterteilen der Systembandbreite erlangt wird, bezieht;

$G_{c,r}$ sich auf einen Koeffizienten, der mit einer Dienstanforderung des Unterbereichs $r$ der Zelle c in Beziehung steht, bezieht;

$N_{c,r}$ sich auf einen Koeffizienten, der mit einer Dienstanforderung und Rauschen des Unterbereichs $r$ der Zelle $c$ in Beziehung steht, bezieht; und

$H_{r,r'}$ sich auf einen Koeffizienten, der mit einer Dienstanforderung und einer Störung des Unterbereichs $r$ der Zelle $c$ in Beziehung steht, bezieht.

7. Frequenzzuweisungsverfahren nach Anspruch 6, wobei das Bestimmen des Soll-Leistungsindikators der jeweiligen Zelle auf der Grundlage der geschätzten Last des zentralen Bereichs und des Randbereichs der jeweiligen Zelle ausdrücklich Folgendes umfasst:

Erhalten für eine Zelle dann, wenn die Dienstanforderung der Zelle die GBR-Dienstanforderung enthält, einer geschätzten Last eines GBR-Dienstes auf der Grundlage der geschätzten Last eines zentralen Bereichs und eines Randbereichs der Zelle; Erhalten eines Soll-Leistungsindikators des GBR-Dienstes auf der Grundlage der geschätzten Last des GBR-Dienstes und Verwenden des Soll-Leistungsindikators des GBR-Dienstes als einen Soll-Leistungsindikators der Zelle;

dann, wenn die Dienstanforderung der Zelle die Nicht-GBR-Dienstanforderung enthält, Erhalten eines Soll-Leistungsindikators eines Nicht-GBR-Dienstes auf der Grundlage der geschätzten Last des GBR-Dienstes und des $\tilde{\rho}_{c,r}$ und Verwenden eines Soll-Leistungsindikators des Nicht-GBR-Dienstes als einen Soll-Leistungsindikator der Zelle; und

dann, wenn die Dienstanforderung der Zelle die GBR-Dienstanforderung und die Nicht-GBR-Dienstanforderung enthält, Erhalten der geschätzten Last des GBR-Dienstes auf der Grundlage einer geschätzten Last eines zentralen Bereichs und eines Randbereichs der Zelle und Erhalten eines Soll-Leistungsindikators des GBR-Dienstes auf der Grundlage der geschätzten Last des GBR-Dienstes; Erhalten eines Soll-Leistungsindikators des Nicht-GBR-Dienstes auf der Grundlage der geschätzten Last des GBR-Dienstes und des $\tilde{\rho}_{c,r}$ und Bestimmen eines Soll-Leistungsindikators der Zelle gemäß der geschätzten Last des GBR-Dienstes und des Soll-Leistungsindikators des Nicht-GBR-Dienstes.

8. Frequenzzuweisungsverfahren nach einem der Ansprüche 1-7, wobei das Bestimmen (101) des Zellen-Clusters ausdrücklich Folgendes umfasst:

Bestimmen der ersten Zelle; und
Bilden des Zellen-Clusters durch die erste Zelle und die Nachbarzelle der ersten Zelle.

9. Frequenzzuweisungsverfahren nach einem der Ansprüche 1-7, wobei das Bestimmen (101) des Zellen-Clusters ausdrücklich Folgendes umfasst:

Bestimmen der ersten Zelle;
Bilden einer Zellengruppe durch die erste Zelle und die Nachbarzelle der ersten Zelle und
dann, wenn die Zellengruppe keine Nachbarzellengruppe besitzt, Bestimmen der Zellengruppe als ein Zellen-Cluster; oder
dann, wenn die Zellengruppe eine Nachbarzellengruppe besitzt, Bestimmen der Zellengruppe und der Nachbarzellengruppe der Zellengruppe als ein Zellen-Cluster.

10. Frequenzzuweisungsvorrichtung, die Folgendes umfasst:

ein erstes Bestimmungsmodul (401), das konfiguriert ist, ein Zellen-Cluster zu bestimmen, wobei das Zellen-Cluster mindestens eine erste Zelle, deren Ist-Leistungsindikator kleiner als ein voreingestellter Schwellenwert ist, und eine Nachbarzelle der ersten Zelle enthält;
ein zweites Bestimmungsmodul (402), das konfiguriert ist, einen Soll-Leistungsindikator jeder Frequenzzuweisungslösung, die dem Zellen-Cluster entspricht, zu bestimmen;
ein drittes Bestimmungsmodul (403), das konfiguriert ist, eine erste Frequenzzuweisungslösung in der jeweiligen Frequenzzuweisungslösung gemäß dem Soll-Leistungsindikator der jeweiligen Frequenzzuweisungslösung zu bestimmen; und ein Zuweisungsmodul (404), das konfiguriert ist, ein Frequenzband für jede Zelle im Zellen-Cluster gemäß der ersten Frequenzzuweisungslösung zuzuweisen, wobei das zweite Bestimmungsmodul (402) ausdrücklich konfiguriert ist, für eine Frequenzzuweisungslösung eine geschätzte Last eines zentralen Bereichs und eines Randbereichs der jeweiligen Zelle gemäß einem Dienstbedarf des zentralen Bereichs und des Randbereichs der jeweiligen Zelle und der Frequenzzuweisungslösung zu bestimmen; und einen Soll-Leistungsindikator von jeder Zelle auf der Grundlage der geschätzten Last des zentralen Bereichs und des Randbereichs der jeweiligen Zelle zu bestimmen und den Soll-Leistungsindikator der jeweiligen Zelle als den Soll-Leistungsindikator der Frequenzzuweisungslösung zu verwenden.

11. Frequenzzuweisungsvorrichtung nach Anspruch 10, wobei das Zellen-Cluster eine erste Zelle enthält und die Frequenzzuweisungsvorrichtung ferner Folgendes umfasst:

ein erstes Unterteilungsmodul, das konfiguriert ist, einer Systembandbreite in N gleiche Teile zu unterteilen, wobei N eine ganze Zahl größer als 2 ist;
ein viertes Bestimmungsmodul, das konfiguriert ist, eine Nachbarzelle der ersten Zelle zu bestimmen, deren Ist-Leistungsindikator am schlechtesten ist, zu bestimmen; und
ein fünftes Bestimmungsmodul, das konfiguriert ist, zu bestimmen, i Teile von Bandbreiten in einem Randbereich der ersten Zelle zu verwenden und (N - i) Teile von Bandbreiten in einem zentralen Bereich der ersten Zelle zu verwenden, wobei i kleiner als oder gleich N - 2 ist und größer als oder gleich 1 ist; zu bestimmen, j Teile von Bandbreiten in einem Randbereich der Nachbarzelle, die den schlechtesten Ist-Leistungsindikator besitzt, zu verwenden und (N - j) Teile von Bandbreiten in einem zentralen Bereich der Nachbarzelle, die den schlechtesten Ist-Leistungsfähigkeitsindikator besitzt, zu verwenden, wobei j größer als oder gleich 1 ist und kleiner als oder gleich N - i - 1 ist; zu bestimmen, k Teile von Bandbreiten in einem Randbereich einer gemeinsamen Nachbarzelle der ersten Zelle und der Nachbarzelle, die den schlechtesten Ist-Leistungsindikator besitzt, zu verwenden und (N - k) Teile von Bandbreiten in einem zentralen Bereich der gemeinsamen Nachbarzelle der ersten Zelle und der Nachbarzelle, die den schlechtesten Ist-Leistungsindikator besitzt, zu verwenden, wobei k = N - i - j; und zu bestimmen, dass ein Frequenzband, das durch weitere Nachbarzellen der ersten Zelle außer der Nachbarzelle, die den schlechtesten Ist-Leistungsindikator besitzt, und der gemeinsamen Nachbarzelle der ersten Zelle und der Nachbarzelle, die den schlechtesten Ist-Leistungsindikator besitzt, verwendet wird, dasselbe ist, wie ein Frequenzband, das durch die Nachbarzelle, die den schlechtesten Ist-Leistungsindikator besitzt, verwendet wird, oder das durch die gemeinsame Nachbarzelle der ersten Zelle und der Nachbarzelle, die den schlechtesten Ist-Leistungsindikator besitzt, verwendet wird.

12. Frequenzzuweisungsvorrichtung nach Anspruch 10 oder 11, wobei das Zellen-Cluster mindestens zwei erste Zellen enthält und die Frequenzzuweisungsvorrichtung ferner Folgendes umfasst:

ein zweites Unterteilungsmodul, das konfiguriert ist, die Systembandbreite in 3M gleiche Teile zu unterteilen, wobei M eine positive ganze Zahl ist;
ein sechstes Bestimmungsmodul, das konfiguriert ist, eine Zellfrequenzzuweisungsgruppe zu bestimmen; und
ein siebtes Bestimmungsmodul, das konfiguriert ist, zu bestimmen, ein Element in der Zellfrequenzzuweisungsgruppe in einem Randbereich für jede Zelle im Zellen-Cluster zu verwenden und den restlichen Teil der Systembandbreite in einem zentralen Bereich zu verwenden.

13. Frequenzzuweisungsvorrichtung nach Anspruch 12, wobei das sechste Bestimmungsmodul ausdrücklich konfiguriert ist, die Zellfrequenzzuweisungsgruppe durch die Formel $3\sum_{n=0}^{M-1}(M-n)$ zu bestimmen.

14. Frequenzzuweisungsvorrichtung nach einem der Ansprüche 10-13, wobei die Dienstanforderung ausdrücklich eine Dienstanforderung mit garantierter Bitrate, GBR-Dienstanforderung, und/oder eine Dienstanforderung ohne garantierte Bitrate, Nicht-GBR-Dienstanforderung, ist.

15. Frequenzzuweisungsvorrichtung nach einem der Ansprüche 10-14, wobei das zweite Bestimmungsmodul (402) ausdrücklich konfiguriert ist, die geschätzte Last des zentralen Bereichs und des Randbereichs der jeweiligen Zelle durch die folgende Formel zu bestimmen:

$$\tilde{\rho}_{c,r} = \sum_{W_{c,r}} \left( \frac{G_{c,r}}{W_{unit}} f \left( \frac{N_{c,r}}{G_{c,r}} + \sum_{d \in I_c} \frac{H_{r,r'} \min(\hat{\rho}_{d,r}, 1)}{G_{c,r}} \right) \right) ;$$

wobei $\tilde{\rho}_{c,r}$ sich auf eine geschätzte Last eines Unterbereichs *r* einer Zelle *c* bezieht und *r* = 1,2 den zentralen Bereich bzw. den Randbereich ausdrückt;

$W_{c,r}$ sich auf eine Unterbandbreitengruppe des Unterbereichs $r$ der Zelle $c$ bezieht; die Funktion $f$

$$f(x) = \frac{\log(2)}{\ln(1+1/x)}$$ ist;

$W_{unit}$ = $W/N$ sich auf eine Bandbreite von jeder Unterbandbreite bezieht; $W$ sich auf die Systembandbreite bezieht und $N$ sich auf die Anzahl von gleichen Teilen, die durch Unterteilen der Systembandbreite erlangt wird, bezieht;

$G_{c,r}$ sich auf einen Koeffizienten, der mit einer Dienstanforderung des Unterbereichs $r$ der Zelle $c$ in Beziehung steht, bezieht;

$N_{c,r}$ sich auf einen Koeffizienten, der mit einer Dienstanforderung und Rauschen des Unterbereichs $r$ der Zelle c in Beziehung steht, bezieht; und

$H_{r,r'}$ sich auf einen Koeffizienten, der mit einer Dienstanforderung und einer Störung des Unterbereichs $r$ der Zelle c in Beziehung steht, bezieht.

16. Frequenzzuweisungsvorrichtung nach Anspruch 15, wobei das zweite Bestimmungsmodul (402) ausdrücklich konfiguriert ist, für eine Zelle dann, wenn die Dienstanforderung der Zelle die GBR-Dienstanforderung enthält, eine geschätzte Last eines GBR-Dienstes auf der Grundlage der geschätzten Last eines zentralen Bereichs und eines Randbereichs der Zelle zu erhalten; einen Soll-Leistungsindikator des GBR-Dienstes auf der Grundlage der geschätzten Last des GBR-Dienstes zu erhalten und den Soll-Leistungsindikator des GBR-Dienstes als einen Soll-Leistungsindikators der Zelle zu verwenden;

dann, wenn die Dienstanforderung der Zelle die Nicht-GBR-Dienstanforderung enthält, einen Soll-Leistungsindikator eines Nicht-GBR-Dienstes auf der Grundlage der geschätzten Last des GBR-Dienstes und des $\tilde{\rho}_{c,r}$ zu erhalten und einen Soll-Leistungsindikatorn des Nicht-GBR-Dienstes als einen Soll-Leistungsindikator der Zelle zu verwenden; und

dann, wenn die Dienstanforderung der Zelle die GBR-Dienstanforderung und die Nicht-GBR-Dienstanforderung enthält, die geschätzte Last des GBR-Dienstes auf der Grundlage einer geschätzten Last eines zentralen Bereichs und eines Randbereichs der Zelle zu erhalten und einen Soll-Leistungsindikator des GBR-Dienstes auf der Grundlage der geschätzten Last des GBR-Dienstes zu erhalten; einen Soll-Leistungsindikator des Nicht-GBR-Dienstes auf der Grundlage der geschätzten Last des GBR-Dienstes und des $\tilde{\rho}_{c,r}$ zu erhalten und einen Soll-Leistungsindikator der Zelle gemäß der geschätzten Last des GBR-Dienstes und des Soll-Leistungsindikators des Nicht-GBR-Dienstes zu bestimmen.

17. Frequenzzuweisungsvorrichtung nach einem der Ansprüche 10-16, wobei das erste Bestimmungsmodul (401) ausdrücklich konfiguriert ist, die erste Zelle zu bestimmen und das Zellen-Cluster durch die erste Zelle und die Nachbarzelle der ersten Zelle zu bilden.

18. Frequenzzuweisungsvorrichtung nach einem der Ansprüche 10-16, wobei das erste Bestimmungsmodul (401) ausdrücklich konfiguriert ist, die erste Zelle zu bestimmen, eine Zellengruppe durch die erste Zelle und die Nachbarzelle der ersten Zelle zu bilden und dann, wenn die Zellengruppe keine Nachbarzellengruppe besitzt, die Zellengruppe als ein Zellen-Cluster zu bestimmen; oder dann, wenn die Zellengruppe eine Nachbarzellengruppe besitzt, die Zellengruppe und die Nachbarzellengruppe der Zellengruppe als ein Zellen-Cluster zu bestimmen.

## Revendications

1. Procédé d'attribution de bandes de fréquences, comprenant :

la détermination (101) d'une grappe de cellules, la grappe de cellules comprenant au moins une première cellule dont l'indice de performances courant est inférieur à un seuil prédéfini et une cellule voisine de la première cellule ;

la détermination (102) d'un indice de performances cible pour chaque solution d'attribution de bandes de fréquences correspondant à la grappe de cellules ;

la détermination (103) d'une première solution d'attribution de bandes de fréquences pour chaque solution d'attribution de bandes de fréquences en fonction de l'indice de performances cible de chaque solution d'attribution de bandes de fréquences ; et

l'attribution (104) d'une bande de fréquences pour chaque cellule de la grappe de cellules en fonction de la première solution d'attribution de bandes de fréquences,

la détermination (102) de l'indice de performances cible de chaque solution d'attribution de bandes de fréquences correspondant à la grappe de cellules comprenant spécifiquement :

pour une solution d'attribution de bandes de fréquences, la détermination d'une charge estimée d'une zone centrale et d'une zone périphérique de chaque cellule en fonction d'une demande de service de la zone centrale et de la zone périphérique de chaque cellule et de la solution d'attribution de bandes de fréquences ; et

la détermination d'un indice de performances cible de chaque cellule sur la base de la charge estimée de la zone centrale et de la zone périphérique de chaque cellule, et l'utilisation de l'indice de performances cible de chaque cellule comme indice de performances cible de la solution d'attribution du bandes de fréquences.

2. Procédé d'attribution de bandes de fréquences selon la revendication 1, la grappe de cellules comprenant une première cellule ; et
chaque solution d'attribution de bandes de fréquences correspondant à la grappe de cellules étant déterminée par les étapes suivantes :

la division (201) d'une largeur de bande du système en N parties égales, N étant un entier supérieur à 2 ;
la détermination (202) d'une cellule voisine de la première cellule, dont l'indice de performances courant est le pire ;
la détermination (203) d'utiliser i parties de largeurs de bande sur une zone périphérique de la première cellule et d'utiliser (N-i) parties de largeurs de bande sur une zone centrale de la première cellule, i étant inférieur ou égal à N-2 et étant supérieur ou égal à 1 ;
la détermination (204) d'utiliser j parties de largeurs de bande sur une zone périphérique de la cellule voisine ayant le pire indice de performances courant et d'utiliser (N-j) parties de largeurs de bande sur une zone centrale de la cellule voisine ayant le pire indice de performances courant, j étant supérieur ou égal à 1 et étant inférieur ou égal à N-i-1 ;
la détermination (205) d'utiliser k parties de largeurs de bande sur une zone périphérique d'une cellule voisine commune de la première cellule et de la cellule voisine ayant le pire indice de performances courant et d'utiliser (N-k) parties de largeurs de bande sur une zone centrale de la cellule voisine commune de la première cellule et de lacellule voisine ayant le pire indice de performances courant, avec k = N-i-j ; et
la détermination (206) qu'une bande de fréquences utilisée par d'autres cellules voisines de la première cellule, à l'exception de la cellule voisine ayant le pire indice de performances courant et de la cellule voisine commune de la première cellule et de la cellule voisine ayant le pire indice de performances courant, est identique à une bande de fréquences utilisée par la cellule voisine ayant le pire indice de performances courant ou utilisée par la cellule voisine commune de la première cellule et de la cellule voisine ayant le pire indice de performances courant.

3. Procédé d'attribution de bandes de fréquences selon la revendication 1 ou 2, la grappe de cellules comprenant au moins deux premières cellules ; et
chaque solution d'attribution de bandes de fréquences correspondant à la grappe de cellules étant déterminée par les étapes suivantes :

diviser (301) la largeur de bande du système en 3M parties égales, M étant un entier positif ;
déterminer (302) un ensemble d'attribution de bandes de fréquences de cellule ; et
déterminer (303) d'utiliser un élément dans l'ensemble d'attribution de bandes de fréquences de cellule sur une zone périphérique pour chaque cellule dans la grappe de cellules et d'utiliser une partie restante de la largeur de bande du système sur une zone centrale.

4. Procédé d'attribution de bandes de fréquences selon la revendication 3, l'ensemble d'attribution de bandes de fréquences de cellule étant spécifiquement déterminé par la formule 3 $3\sum_{m-1}^{n=0}(M-n).$

5. Procédé d'attribution de bandes de fréquences selon l'une quelconque des revendications 1 à 4, la demande de service étant spécifiquement une demande de service à débit binaire garanti, GBR, et/ou une demande de service à débit binaire non garanti, non-GBR.

6. Procédé d'attribution de bandes de fréquences selon l'une quelconque des revendications 1 à 5, la charge estimée de la zone centrale et de la zone périphérique de chaque cellule étant spécifiquement déterminée par la formule suivante :

$$\tilde{\rho}_{c,r} = \sum_{W_{c,r}} \left( \frac{G_{c,r}}{W_{unit}} f\left( \frac{N_{c,r}}{G_{c,r}} + \sum_{d \in l_c} \frac{H_{r,r'} \min(\hat{\rho}_{d,r}, 1)}{G_{c,r}} \right) \right);$$

$\tilde{\rho}_{c,r}$ se référant à une charge estimée d'une sous-zone r d'une cellule c, et r=1, 2 exprimant respectivement la zone centrale et la zone périphérique ;

$W_{c,r}$ se référant à un ensemble de sous-bandes de la sous-zone r de la cellule c ; la fonction f étant

$$f(x) = \frac{log(2)}{ln(1+1/x)} \; ;$$

$W_{unit}$=W/N se référant à une largeur de bande de chaque sous-bande ;

W se référant à la largeur de bande du système, et N se référant au nombre de parties égales acquises en divisant la largeur de bande du système ;

$G_{c,r}$ se référant à un coefficient lié à une demande de service de la sous-zone r de la cellule c ;

$N_{c,r}$ se référant à un coefficient lié à une demande de service et au bruit de la sous-zone r de la cellule c ; et

$H_{r,r'}$ se référant à un coefficient lié à une demande de service et au brouillage de la sous-zone r de la cellule c.

7. Procédé d'attribution de bandes de fréquences selon la revendication 6, la détermination de l'indice de performances cible de chaque cellule sur la base de la charge estimée de la zone centrale et de la zone périphérique de chaque cellule comprenant spécifiquement :

pour une cellule, si la demande de service de la cellule comprend la demande de service GBR, l'obtention d'une charge estimée d'un service GBR sur la base de la charge estimée d'une zone centrale et d'une zone périphérique de la cellule ; et l'obtention d'un indice de performances cible du service GBR sur la base de la charge estimée du service GBR, et l'utilisation de l'indice de performances cible du service GBR comme indice de performances cible de la cellule ;

si la demande de service de la cellule comprend la demande de service non-GBR, l'obtention d'un indice de performances cible d'un service non-GBR sur la base de la charge estimée du service GBR et du $\tilde{\rho}_{c,r}$, et l'utilisation d'un indice de performances cible du service non-GBR comme indice de performances cible de la cellule ; et

si la demande de service de la cellule comprend la demande de service GBR et la demande de service non GBR, l'obtention de la charge estimée du service GBR sur la base d'une charge estimée d'une zone centrale et d'une zone périphérique de la cellule, et l'obtention d'un indice de performances cible du service GBR sur la base de la charge estimée du service GBR ; et l'obtention d'un indice de performances cible du service non GBR sur la base de la charge estimée du service GBR et du $\tilde{\rho}_{c,r}$ et la détermination d'un indice de performances cible de la cellule selon la charge estimée du service GBR et l'indice de performances cible du service non-GBR.

8. Procédé d'attribution de bandes de fréquences selon l'une quelconque des revendications 1 à 7, la détermination (101) de la grappe de cellules comprenant spécifiquement :

la détermination de la première cellule ; et
la formation d'une grappe de cellules par la première cellule et la cellule voisine de la première cellule.

9. Procédé d'attribution de bandes de fréquences selon l'une quelconque des revendications 1 à 7, la détermination (101) de la grappe de cellules comprenant spécifiquement :

la détermination de la première cellule ;
la formation d'un groupe de cellules par la première cellule et la cellule voisine de la première cellule ; et
si le groupe de cellules n'a pas de groupe de cellules voisin, la détermination du groupe de cellules comme une grappe de cellules ;
si le groupe de cellules a un groupe de cellules voisin, la détermination du groupe de cellules et du groupe de cellules voisin du groupe de cellules comme une grappe de cellules.

10. Appareil d'attribution de bandes de fréquences, comprenant :

un premier module de détermination (401), configuré pour déterminer une grappe de cellules, la grappe de cellules comprenant au moins une première cellule dont l'indice de performances courant est inférieur à un seuil prédéfini et une cellule voisine de la première cellule ;

un deuxième module de détermination (402), configuré pour déterminer un indice de performances cible de chaque solution d'attribution de bandes de fréquences correspondant à la grappe de cellules ;

un troisième module de détermination (403), configuré pour déterminer une première solution d'attribution de bandes de fréquences dans chaque solution d'attribution de bandes de fréquences en fonction de l'indice de performances cible de chaque solution d'attribution de bandes de fréquences ; et

un module d'attribution (404), configuré pour attribuer une bande de fréquences pour chaque cellule de la grappe de cellules selon la première solution d'attribution de bandes de fréquences,

le deuxième module de détermination (402) étant configuré spécifiquement pour : pour une solution d'attribution de bandes de fréquences, déterminer une charge estimée d'une zone centrale et d'une zone périphérique de chaque cellule selon une demande de service de la zone centrale et de la zone périphérique de chaque cellule et la solution d'attribution de bandes de fréquences ; et déterminer un indice de performances cible de chaque cellule sur la base de la charge estimée de la zone centrale et de la zone périphérique de chaque cellule, et utiliser l'indice de performances cible de chaque cellule comme indice de performances cible de la solution d'attribution de bandes de fréquences.

**11.** Appareil d'attribution de bandes de fréquences selon la revendication 10, la grappe de cellules comprenant une première cellule ; et l'appareil d'attribution de bandes de fréquences comprenant en outre :

un premier module de division, configuré pour diviser une largeur de bande du système en N parties égales, N étant un entier supérieur à 2 ;

un quatrième module de détermination, configuré pour déterminer une cellule voisine de la première cellule, dont l'indice de performances courant est le pire ; et

un cinquième module de détermination, configuré pour déterminer d'utiliser i parties de largeurs de bande sur une zone périphérique de la première cellule et d'utiliser (N-i) parties de largeurs de bande sur une zone centrale de la première cellule, i étant inférieur ou égal à N-2 et étant supérieur ou égal à 1 ; déterminer d'utiliser j parties de largeurs de bande sur une zone périphérique de la cellule voisine ayant le pire indice de performances courant et d'utiliser (N-j) parties de largeurs de bande sur une zone centrale de la cellule voisine ayant le pire indice de performances courant, j étant supérieur ou égal à 1 et étant inférieur ou égal à N-i-1 ; déterminer d'utiliser k parties de largeurs de bande sur une zone périphérique d'une cellule voisine commune de la première cellule et de la cellule voisine ayant le pire indice de performances courant et d'utiliser (N-k) parties de largeurs de bande sur une zone centrale de la cellule voisine commune de la première cellule et de la cellule voisine ayant le pire indice de performances courant, avec k=N-i-j ; et déterminer qu'une bande de fréquences utilisée par d'autres cellules voisines de la première cellule, à l'exception de la cellule voisine ayant le pire indice de performances courant et de la cellule voisine commune de la première cellule et de la cellule voisine ayant le pire indice de performances courant, est identique à une bande de fréquences utilisée par la cellule voisine ayant le pire indice de performances courant ou utilisée par la cellule voisine commune de la première cellule et de la cellule voisine ayant le pire indice de performances courant.

**12.** Appareil d'attribution de bandes de fréquences selon la revendication 10 ou 11, la grappe de cellules comprenant au moins deux premières cellules ; et l'appareil d'attribution de bandes de fréquences comprenant en outre :

un deuxième module de division, configuré pour diviser la largeur de bande du système en 3M parties égales, M étant un entier positif ;

un sixième module de détermination, configuré pour déterminer un ensemble d'attribution de bandes de fréquences de cellule ; et

un septième module de détermination, configuré pour déterminer d'utiliser un élément d'ans l'ensemble d'attribution de bandes de fréquences de cellules sur une zone périphérique pour chaque cellule de la grappe de cellules et d'utiliser une partie restante de la largeur de bande du système sur une zone centrale.

**13.** Appareil d'attribution de bandes de fréquences selon la revendication 12, le sixième module de détermination étant configuré spécifiquement pour déterminer l'ensemble d'attribution de bandes de fréquences de cellule par la formule

$$3 \sum_{m-1}^{n=0} (M - n).$$

**14.** Appareil d'attribution de bandes de fréquences selon l'une quelconque des revendications 10 à 13, la demande de service étant spécifiquement une demande de service à débit binaire garanti, GBR, et/ou une demande de service à débit binaire non garanti, non-GBR.

**15.** Appareil d'attribution de bandes de fréquences selon l'une quelconque des revendications 10 à 14, le deuxième module de détermination (402) étant configuré spécifiquement pour déterminer la charge estimée de la zone centrale et de la zone périphérique de chaque cellule par la formule suivante :

$$\tilde{\rho}_{c,r} = \sum_{W_{c,r}} \left( \frac{G_{c,r}}{W_{unit}} f\left( \frac{N_{c,r}}{G_{c,r}} + \sum_{d \in l_c} \frac{H_{r,r'} \min(\hat{\rho}_{d,r'}, 1)}{G_{c,r}} \right) \right) ;$$

$\tilde{\rho}_{c,r}$ se référant à une charge estimée d'une sous-zone r d'une cellule c, et r=l, 2 exprimant respectivement la zone centrale et la zone périphérique ;

$W_{c,r}$ se référant à un ensemble de sous-bandes de la sous-zone r de la cellule c ; la fonction f étant

$$f(x) = \frac{log(2)}{ln(1+1/x)} ;$$

$W_{unit}$=W/N se référant à une largeur de bande de chaque sous-bande ; W se référant à la largeur de bande du système, et N se référant au nombre de parties égales acquises en divisant la largeur de bande du système ;

$G_{c,r}$ se référant à un coefficient lié à une demande de service de la sous-zone r de la cellule c ;

$N_{c,r}$ se référant à un coefficient lié à une demande de service et au bruit de la sous-zone r de la cellule c ; et

$H_{r,r'}$ se référant à un coefficient lié à une demande de service et au brouillage de la sous-zone r de la cellule c.

**16.** Appareil d'attribution de bandes de fréquences selon la revendication 15, le deuxième module de détermination (402) étant configuré spécifiquement pour : pour une cellule, si la demande de service de la cellule comprend la demande de service GBR, obtenir une charge estimée d'un service GBR sur la base de la charge estimée d'une zone centrale et d'une zone périphérique de la cellule ; et obtenir un indice de performances cible du service GBR sur la base de la charge estimée du service GBR et utiliser l'indice de performances cible du service GBR comme indice de performances cible de la cellule ;

si la demande de service de la cellule comprend la demande de service non-GBR, obtenir un indice de performances cible d'un service non-GBR sur la base de la charge estimée du service GBR et du $\tilde{\rho}_{c,r}$, et utiliser un indice de performances cible du service non-GBR comme indice de performances cible de la cellule ; et

si la demande de service de la cellule comprend la demande de service GBR et la demande de service non GBR, obtenir la charge estimée du service GBR sur la base d'une charge estimée d'une zone centrale et d'une zone périphérique de la cellule, et obtenir un indice de performances cible du service GBR sur la base de la charge estimée du service GBR ; et obtenir un indice de performances cible du service non GBR sur la base de la charge estimée du service GBR et du $\tilde{\rho}_{c,r}$, et déterminer un indice de performances cible de la cellule en fonction de la charge estimée du service GBR et de l'indice de performances cible du service non GBR.

**17.** Appareil d'attribution de bandes de fréquences selon l'une quelconque des revendications 10 à 16, le premier module de détermination (401) étant configuré spécifiquement pour : déterminer la première cellule ; et former la grappe de cellules par la première cellule et la cellule voisine de la première cellule.

**18.** Appareil d'attribution de bandes de fréquences selon l'une quelconque des revendications 10 à 16, le premier module de détermination (401) étant configuré spécifiquement pour : déterminer la première cellule ; former un groupe de cellules par la première cellule et la cellule voisine de la première cellule ; et si le groupe de cellules n'a pas de groupe de cellules voisin, déterminer le groupe de cellules comme une grappe de cellules ; si le groupe de cellules a un groupe de cellules voisin, déterminer le groupe de cellules et le groupe de cellules voisin du groupe de cellules comme une grappe de cellules.

determining a cell cluster — 101

determining a target performance indicator of each spectrum allocation solution corresponding to the cell cluster — 102

determining a first spectrum allocation solution in each spectrum allocation solution according to the target performance indicator of each spectrum allocation solution — 103

allocating a spectrum for each cell in the cell cluster according to the first spectrum allocation solution — 104

Fig.1

Fig.2

Fig.3a

dividing the system bandwidth into N equal parts | 201

determining a neighbor cell of the first cell, whose current performance indicator is worst | 202

determining to use i parts of bandwidths on an edge area of the first cell and use (N-i) parts of bandwidths on a central area of the first cell | 203

determining to use j parts of bandwidths on the edge area of the neighbor cell having the worst current performance indicator and use (N-j) parts of bandwidths on the central area of the neighbor cell having the worst current performance indicator | 204

determining to use k parts of bandwidths on the edge area of a common neighbor cell of the first cell and the neighbor cell having the worst current performance indicator and use (N-k) parts of bandwidths on the central area of the common neighbor cell of the first cell and the neighbor cell having the worst current performance indicator | 205

determining that a spectrum used by other neighbor cells of the first cell except the neighbor cell having the worst current performance indicator and the common neighbor cell of the first cell and the neighbor cell having the worst current performance indicator is the same as a spectrum used by the neighbor cell having the worst current performance indicator or the neighbor cell having the worst current performance indicator and the common neighbor cell of the first cell and the neighbor cell having the worst current performance indicator | 206

Fig.3b

Fig.3c

| cell | F1 | F2 | | | F5 | | | | | | | | | | | | F17 | | | | F21 |
|------|----|----|---|---|----|---|---|---|---|---|---|---|---|---|---|---|-----|---|---|---|------|
| I | 6 | 5 | 5 | 4 | 4 | 4 | 3 | 3 | 3 | 3 | 2 | 2 | 2 | 2 | 2 | 1 | 1 | 1 | 1 | 1 | 1 |
| J | 1 | 1 | 2 | 1 | 2 | 3 | 1 | 2 | 3 | 4 | 1 | 2 | 3 | 4 | 5 | 1 | 2 | 3 | 4 | 5 | 6 |
| K | 1 | 2 | 1 | 3 | 2 | 1 | 4 | 3 | 2 | 1 | 5 | 4 | 3 | 2 | 1 | 6 | 5 | 4 | 3 | 2 | 1 |
| ... | | | | | | | | | | | | | | | | | | | | | |

Fig.3d

dividing the system bandwidth into 3M equal parts, wherein M is a positive integer — 301

determining a cell spectrum allocation set — 302

determining to use one element in the cell spectrum allocation set on the edge area for each cell in the cell cluster and use the rest part of the system bandwidth on the central area — 303

Fig.4a

| cell | F1 | F2 | F3 | F4 | F5 | F6 | F7 | F8 | F9 |
|------|----|----|-------|----|----|-------|----|----|-------|
| 1 | 1 | 2 | (1, 2) | 3 | 4 | (3,4) | 5 | 6 | (5,6) |
| 2 | 1 | 2 | (1, 2) | 3 | 4 | (3,4) | 5 | 6 | (5,6) |
| 3 | 1 | 2 | (1, 2) | 3 | 4 | (3,4) | 5 | 6 | (5,6) |
| ... | | | | | | | | | |

Fig.4b

| | F1 | F2 | F3 | F4 | F5 | F6 | F7 | F8 | F9 | F10 | F11 | F12 | F13 | F14 | F15 | F16 | F17 | F18 |
|------|----|----|----|-------|-------|---------|----|----|----|-------|-------|---------|-----|-----|-----|-------|-------|--------|
| element | 1 | 2 | 3 | (1, 2) | (2, 3) | (1,2, 3) | 4 | 5 | 6 | (4, 5) | (5, 6) | (4,5, 6) | 7 | 8 | 9 | (7, 8) | (8, 9) | (7,8, 9) |

Fig.4c

```
┌─────────────────────────────────────┐
│     particle swarm initialization    │
└─────────────────────────────────────┘
                    │
                    ▼
┌─────────────────────────────────────┐
│      particle fitness evaluation     │
└─────────────────────────────────────┘
                    │
                    ▼
┌─────────────────────────────────────┐
│     perform ranking for the particle │
│    swarm based on fitness, and       │
│           calculate density          │
└─────────────────────────────────────┘
                    │
                    ▼
┌─────────────────────────────────────┐
│      calculate a historical optimal  │
│        position of an individual      │
└─────────────────────────────────────┘
                    │
                    ▼
┌─────────────────────────────────────┐
│  calculate a historical optimal      │
│        position of swarm             │
└─────────────────────────────────────┘
                    │
                    ▼
┌─────────────────────────────────────┐
│    update velocity and position of a │
│               particle               │
└─────────────────────────────────────┘
                    │
                    ▼
┌─────────────────────────────────────┐
│    generating a new particle based on│
│           genetic operator           │
└─────────────────────────────────────┘
                    │
                    ▼
         No    ◇ meet a termination ◇
      ◄────────◇    condition        ◇
                    │
                    │ Yes
                    ▼
              ┌──────────┐
              │   end    │
              └──────────┘
```

Fig.5

a first determining module — 401

a second determining module — 402

a third determining module — 403

an allocating module — 404

Fig.6

501 — a first processor     502 — a memory

500

505 — a bus interface ↔ a receiver — 503

504 — a spectrum allocator

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013026417 A1
- US 2006212588 A1